# EUROPEAN PATENT APPLICATION

(11) **EP 4 446 773 A1**
(43) Date of publication of application: **16.10.2024**
(21) Application number: 24163194.4
(22) Date of filing: 13.03.2024
(51) Int. Cl.: G01S 7/481, G01S 7/4863, G01S 7/4865, G01S 17/88

(54) **LASER DRIVER**

(30) Priority: 24.03.2023 US 202363454544 P; 07.03.2024 US 202418598944; 07.03.2024 US 202418598916
(71) Applicant: Analog Devices International Unlimited Company, Limerick (IE)
(72) Inventor: HURWITZ, Jonathan, Co. Limerick (IE); DIN, Jose Bernardo, Co. Limerick (IE)
(74) Representative: Horler, Philip John

(57) **Abstract**

The present disclosure provides an improved indirect time-of-flight (iToF) system. The iToF system includes an imager and a laser driver system. The laser driver system receives an analog laser control signal from the imager, generating an analog laser driver current based on the analog laser control signal. The analog laser driver current is generated such that any change in an amplitude of the analog laser control signal causes a change in an amplitude of the analog laser drive current. Further, the present disclosure provides improved imagers and laser driver systems for use in an indirect time-of-flight system. An indirect time-of-flight system including a high-side multiplicative push-pull current mirror is also provided.

## Description

### Technical Field

The present disclosure relates to a time-of-flight system, and in particular to multi-level analog communication between an imager and laser system.

### Background

Time-of-flight (ToF) systems may comprise an imager and a laser-driver system. The imager may include an image sensor and the laser-driver system may include a laser. An indirect, or continuous wave (CW) ToF camera system uses the image sensor of the imager to determine the phase shift between emitted light (light which is emitted by the laser of the laser-driver system) and detected light (light detected by the image sensor of the imager). This phase shift may be used to determine the distance travelled by the emitted light.

Typically, the imager and laser-driver system are packaged separately, with a control signal transmitted from the imager to the laser-driver system. The control signal may be a low-voltage differential signal, which is a digital signal indicating times at which the laser should be turned on or off.

### Summary

The present inventors have recognised that there is a need for an imager to have greater control of the light emitted by a laser driver system.

According to a first aspect of the invention there is provided an indirect time-of-flight, iToF, system comprising: an imager, the imager comprising: a controller configured to generate an analog laser control signal and an image sensor control signal; and an image sensor for accumulating charge based on received incident light, wherein the image sensor is configured to receive the image sensor control signal for controlling a timing of charge accumulation of the image sensor; and a laser driver coupled to the imager, wherein the laser driver is configured to receive the analog laser control signal and generate an analog laser drive current using the analog laser control signal, wherein the laser driver is configured to generate the analog laser drive current such that a change in an amplitude of the analog laser control signal causes a change in an amplitude of the analog laser drive current.

According to a second aspect of the invention there is provided a laser driver for use in a time-of-flight, ToF, system that comprises an imager and a laser, the laser driver being configured to: receive an analog laser control signal; generate an analog laser drive current having an amplitude that is dependent on an amplitude of the analog laser control signal; and output the analog laser drive current to a laser for driving the laser to emit light.

According to a third aspect of the invention there is provided an imager for use in a time-of-flight, ToF, system, the imager comprising: a controller configured to generate an analog laser control signal and an image sensor control signal; and an image sensor for accumulating charge based on received incident light, wherein the image sensor is configured to receive the image sensor control signal for controlling a timing of charge accumulation of the image sensor; wherein the imager is for coupling to a laser driver, and wherein the imager is configured to output the analog laser control signal to the laser driver.

According to a fourth aspect of the invention there is provided a time-of-flight, ToF, system comprising: an imager, the imager comprising: a controller configured to output a laser control signal and an image sensor control signal; and an image sensor for accumulating charge based on received incident light, wherein the image sensor is configured to receive the image sensor control signal for controlling a timing of charge accumulation of the image sensor; a laser driver system configured to receive the laser control signal, the laser driver comprising: a high-side laser driver, the high-side laser driver configured to generate a laser drive current dependent on the laser control signal.

According to a fifth aspect of the invention there is provided a laser driver system for use in a time-of-flight, ToF, system that comprises an imager and a laser, the laser driver system being configured to receive a laser control signal from the imager, wherein the laser driver system comprises: a high-side laser driver, the high-side laser driver configured to generate a laser drive current dependent on the laser control signal.

According to a sixth aspect of the invention there is provided a time-of-flight, ToF, system comprising: an imager, the imager comprising: a controller configured to output a laser control signal and an image sensor control signal; a laser driver system configured to receive the laser control signal, the laser driver comprising: a high-side multiplicative current mirror, the high-side multiplicative current mirror configured to generate a laser drive current dependent on the laser control signal.

### Drawings

Aspects of the disclosure will now be described by way of example only and with reference to the accompanying drawings, wherein like reference numerals refer to like parts, and wherein:
Figure 1 shows a time-of-flight system including an imager and a laser driver system.
Figure 2a shows a time-of-flight system including an imager and laser driver system.
Figure 2b shows a time-of-flight system with a controller including a clock generator and a DAC.
Figure 2c shows a time-of-flight system where the laser driver comprises a current mirror.
Figure 2d shows a time-of-flight system where the laser driver comprises a voltage-to-current converter.
Figure 2e shows a time-of-flight system where the laser driver includes a constant current source.
Figure 2f shows a simplified version of the time-of-flight system according to figure 2e.
Figure 3 shows a time-of-flight system including a current mirror in the laser driver.
Figure 4 shows a time-of-flight system where the laser driver is a low-side laser driver.
Figure 5 shows a simplified representation of a time-of-flight system;
Figure 6 shows a time-of-flight system which includes a DAC in the laser driver system.
Figure 7 shows a time-of-flight system including a current mirror formed of two transistors.
Figure 8 shows a time-of-flight system which includes a plurality of laser control signals.
Figure 9 shows a digital-to-analog converter;
Figure 10a shows a detailed implementation of a digital-to-analog converter;
Figure 10b shows an implementation of a pre-driver;
Figure 10c shows an implementation of a current source;
Figure 10d shows an implementation of a bias current source;
Figure 11 shows an implementation of a laser driver.
Figure 12 shows an alternative implementation of a laser driver.
Figure 13 shows an alternative implementation of a laser driver including two laser drivers coupled to a single laser.
Figure 14 shows the driving of a single anode of a single laser.
Figure 15 shows the split driving of multiple anodes of a single laser.
Figure 16a shows an implementation of a ToF system including imager, laser driver and two lasers.
Figure 16b shows a layout of the ToF system of figure 16a
Figure 17a shows a layout of the connection of the laser driver system;
Figure 17b shows a side view of the laser driver system of figure 17a.

### Detailed Description

Time-of-flight (ToF) systems may comprise an imager and a laser-driver system. The imager may include an image sensor and the laser-driver system may include a laser. An indirect, or continuous wave (CW) ToF camera system uses the image sensor of the imager to determine the phase shift between emitted light (light which is emitted by the laser of the laser-driver system) and detected light (light detected by the image sensor of the imager). This phase shift may be used to determine the distance travelled by the emitted light.

Typically, the imager and the laser-driver system are packaged separately. For example, a first integrated circuit may comprise the imager, and the laser-driver system may be formed of a number of discrete components and/or packages.

As the time-of-flight system relies on determining a phase difference between the emitted light and the received light, the system may modulate both the laser and the image sensor. Modulating the laser may comprise supplying a signal to control when the laser turns on and off. Modulating the image sensor may be the control of an accumulation period during which the image sensor accumulates light. The operation for determining distance using a continuous wave time-of-flight system is known by the person skilled in the art and will not be described in detail here.

The imager may provide a control signal to the laser-driver system. This control signal is typically a digital, or on-off signal, indicating times at which the laser of the laser-driver system should be turned on and times at which the laser of the laser-driver system should be turned off. The application of current to drive the laser is dependent on the digital state of the control signal sent from the imager. For example, as long as the control signal is above a threshold, a set current is provided to drive the laser. The imager has no further control on the properties of the signal used to drive the laser, as no further information is included in the control signal.

In contrast, the inventors have developed an approach where rather than supplying a digital laser control signal which has two states, an analog laser control signal may instead be supplied by the imager to the laser driver. Since the laser control signal is an analog signal, it is not limited to just two defined voltage or current levels (eg, a zero level and a non-zero level). As such, the analog laser control signal can control more than just whether the laser is on or off. The laser driver may use the control signal to generate the analog laser driver current such that a change in the amplitude of the analog laser control signal causes a change in the amplitude of the current used to drive the laser. As such, the analog laser control signal allows control of the amplitude of the laser drive current, and thus the intensity of the laser output. This provides a system which allows the imager greater control of the laser and can be used for calibration.

Whilst the imager may its supply the analog laser control signal, alternatively the imager may supply a digital laser control signal to the laser driver and an analog laser control signal may be generated by the laser driver system based on a digital signal. This again allows greater control of the laser to be provided, whilst allowing the system to operate with imagers which cannot output an analog signal or do not include a DAC.

Further, the laser driver system may include a high-side laser driver, where the laser driver is coupled between a positive or high voltage rail and the anode of the laser. This allows the cathode of the laser to be coupled to ground, which may be a ground plane. A ground plane can be used as a heatsink, providing improved thermal management and cooling of the laser. Further, it allows improved laser-to-laser driver integration, resulting in reduced parasitic inductance and resistance.

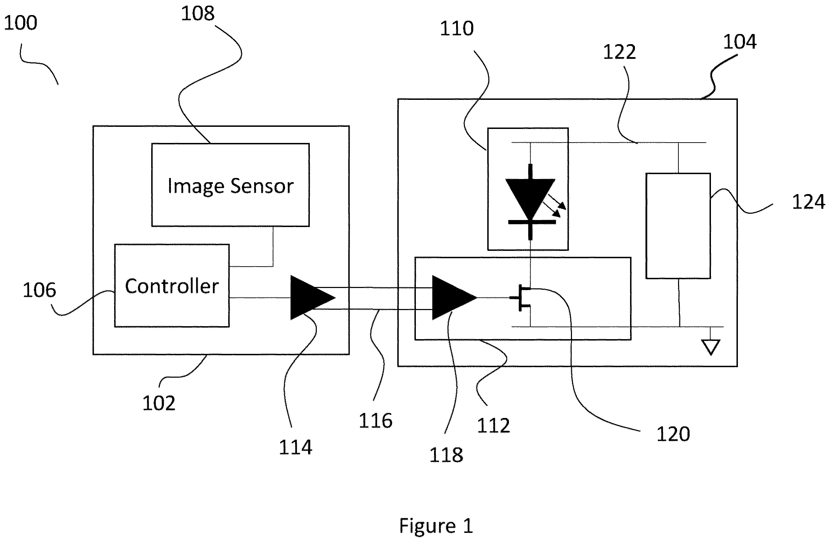

Figure 1 shows a time-of-flight system 100 including an imager 102 and a laser driver system 104.

The imager 102 comprises a controller 106 and an image sensor 108. The controller 106 may output a laser control signal and an image sensor control signal. The laser control signal may be a digital signal for controlling the operation of a laser 110. The image sensor control signal may be a control signal for controlling the operation of the image sensor 108. In this way, the relative phase of the emitted and received light may be controlled, allowing the system to operate as an indirect time-of-flight (ToF) system, or a continuous wave ToF system.

The laser control signal may be supplied to the laser driver system 104, and more specifically to a laser driver 112 of the laser driver system 104. As the first control signal is a digital signal, a low-voltage differential signal may be supplied from the imager 102 to the laser driver system 104. The low-voltage differential signal may be formed of a first signal and a second signal. The imager 102 may comprise a first system 114 for converting the single-ended laser control signal to a differential signal 116, and the laser driver system 104 may comprise a second system 118 for converting the differential signal 116 to a single-ended signal laser control signal.

The laser driver 112 may comprise a means for driving the laser 110. For example, shown in figure 1 is a single transistor 120 which receives the laser control signal and controls the current through the laser 110. The transistor 120 shown in the figure 1 represents a low-side drive system, in that the laser driver 112 is coupled to the cathode of the laser 110, and the laser driver 112 is also coupled to a ground, or negative potential. The laser 110 is therefore directly coupled to the positive voltage rail 122.

The laser driver system 104 may include further components 124. For example, it is common to include a capacitor between the supply rails, and a diode across the laser 110.

As the laser control signal supplied by the controller 106 to the laser driver 112 is a digital signal, the current in the laser 110 is dependent on the digital state of this signal (1 or 0, on or off). No further information is contained in the laser control signal. The current in the laser 110 is therefore determined by the specification of the transistor 120, for example, the sizing of the transistor 120.

As long as the first digital control signal is above or below a threshold of the laser driver 112, a certain, fixed level of current is provided to the laser. The level of current in the laser 110 is dependent on the digital state of the laser control signal sent from the imager 102.

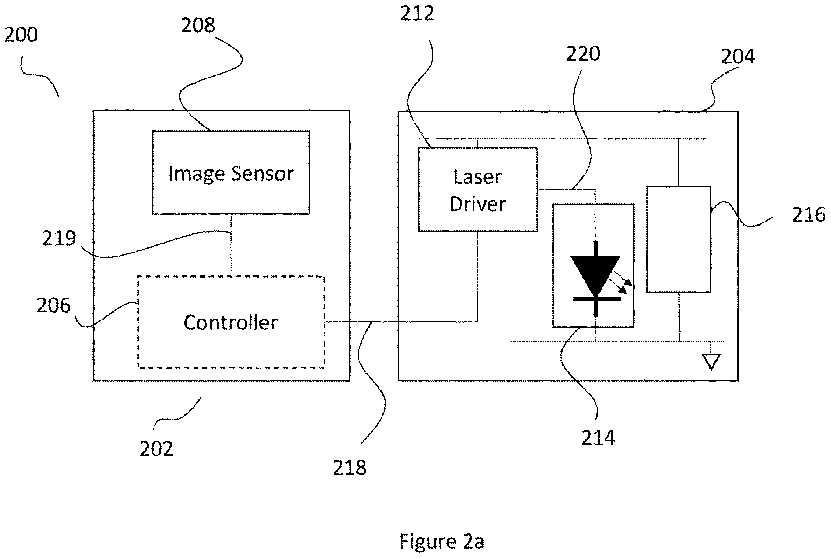

Figure 2a shows an example of an indirect time-of-flight (ToF) system 200 (which may alternatively be referred to as a continuous wave time-of-flight system) in accordance with an aspect of this disclosure. The ToF system 200 comprising an imager 202 and a laser driver system 204. The imager 202 comprises a controller 206 capable of outputting a laser control signal 218 and an image sensor control signal 219. The laser control signal 218 may be an analog laser control signal for controlling the operation of a laser 214. The image sensor control signal 219 may be a control signal for controlling the operation of the image sensor 208. In this way, the relative phase of the emitted and received light may be controlled, allowing the system to operate as an indirect time-of-flight (ToF) system, or a continuous wave ToF system.

The image sensor 208 is configured to receive the image sensor control signal 219 from the controller 206. The image sensor control signal 219 indicates the period in which the image sensor 208 should accumulate light, or charge, for example, specifying the phase in which the image sensor 208 should accumulate light, or a timing of charge accumulation of the image sensor 208. The image sensor 208 may be a demodulating image sensor 208 or demodulating pixel array, and as such the image sensor 208 may continuously accumulate light and a duty cycle of the image sensor control signal may control the accumulation of light.

The laser control signal 218 output by the controller 206 is provided to the laser driver system 204, and in particular to the laser driver 212 of the laser driver system 204. The laser driver 212 is configured to generate an analog laser drive current 220 capable of driving the laser 214. The laser driver 212 is configured to generate the analog laser drive current 220 such that a change in an amplitude of the analog laser control signal causes a change in an amplitude of the analog laser drive current. In some instances, the analog laser drive current 220 is generated such that any change in an amplitude of the analog laser control signal 218 causes a change in an amplitude of the analog laser drive current 220. For example, any change in the amplitude of the analog laser control signal 218 may result in a change in the amplitude of the analog laser drive current 220 for values that are within the operating range of the system (for example, for control signal values that are within the operating range of the system, which may be a positive range of values with an upper limit that is based on the largest laser control signal 218 that the controller 206 can generate and/or the largest analog laser drive current 220 that the laser driver 212 can generate, and a lower limit of zero, or ground, or some positive value that is less than the upper limit). In some example implementations, the analog laser drive current 220 may be generated by the laser driver 212 based on the analog laser control signal 218 such that an amplitude of the analog laser drive current 220 is proportional to an amplitude of the analog laser control signal 202.. The laser 214 receives the laser drive current 220 and is driven by the laser drive current 220.

The laser drive current 220 may be proportional to the analog laser control signal 218, however it should be appreciated that the laser driver 212, or other components in the imager 202 or laser driver system 204, may insert an offset between the analog laser control signal 218 and the analog laser drive current 220. Further, the analog laser drive current 220 may be of a different magnitude, for example a greater magnitude, than the analog laser control signal 218. This may be achieved through the laser driver 212 including a programmable, or alternatively fixed, gain. A change in the analog laser control signal 218 may cause a proportional change in the analog laser drive current 220. However, the skilled person would understand that this proportionality may be within limits - for example, the analog laser drive current 220 may be generated such that it is proportional to the analog laser control signal 218 within a threshold range (or in other words, within the operating range of the system). The laser driver may generate the analog laser driver current 220 to be proportional to the analog laser control signal 218 when the laser drive current 220 is above a lower threshold and below an upper threshold. Changes in the analog laser control signal 218 which would result in the laser drive current 220 falling outside of this threshold range may have no effect on the laser drive current 220. The lower threshold may be a minimum laser drive current or zero amps. The upper threshold may be a maximum laser drive current, for example the maximum drive current that the laser 214 or other components within the laser driver system 204 are designed or specified to operate with.

The laser 214 may be any light-source suitable for an ToF system, for example, a vertical-cavity surface-emitting laser, VCSEL, which is coupled to the laser driver 212.

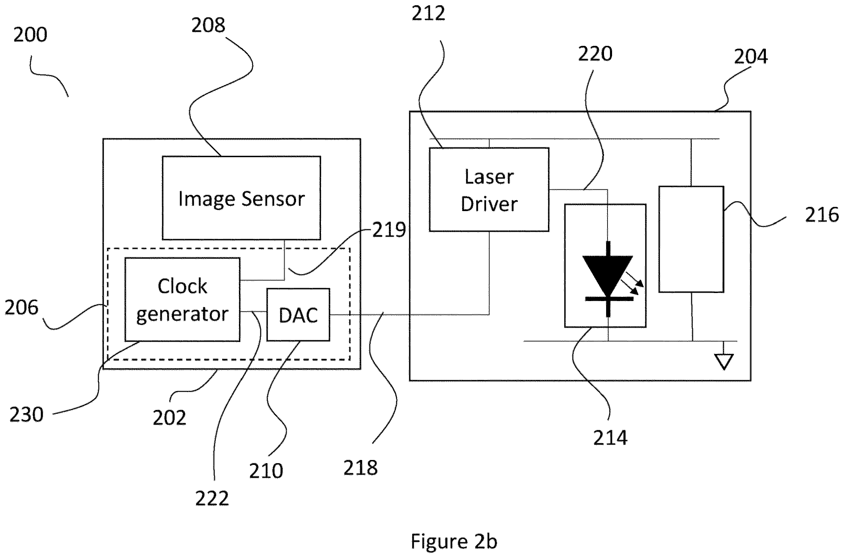

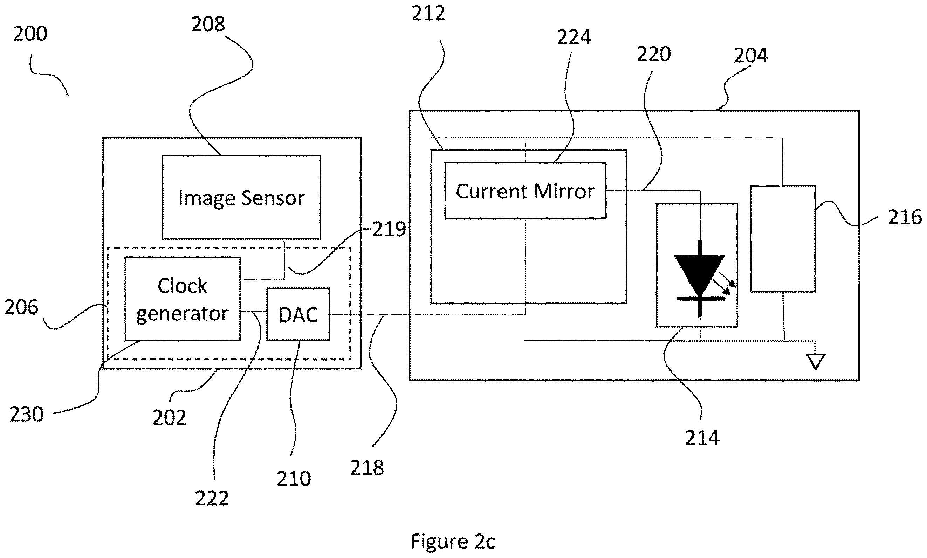

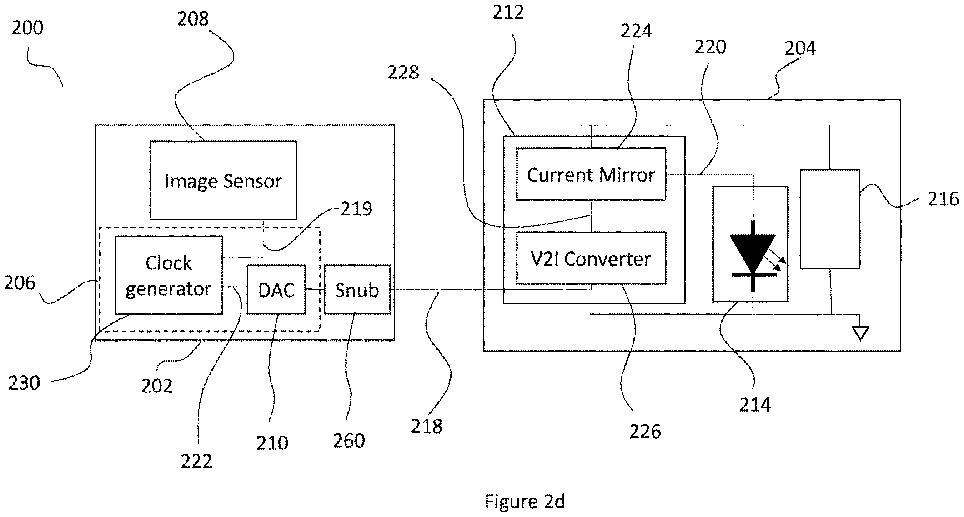

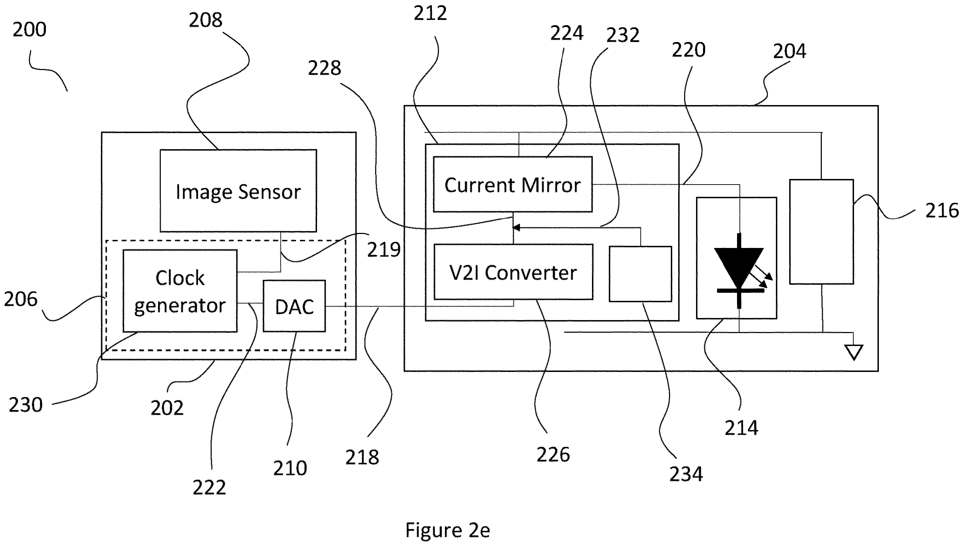

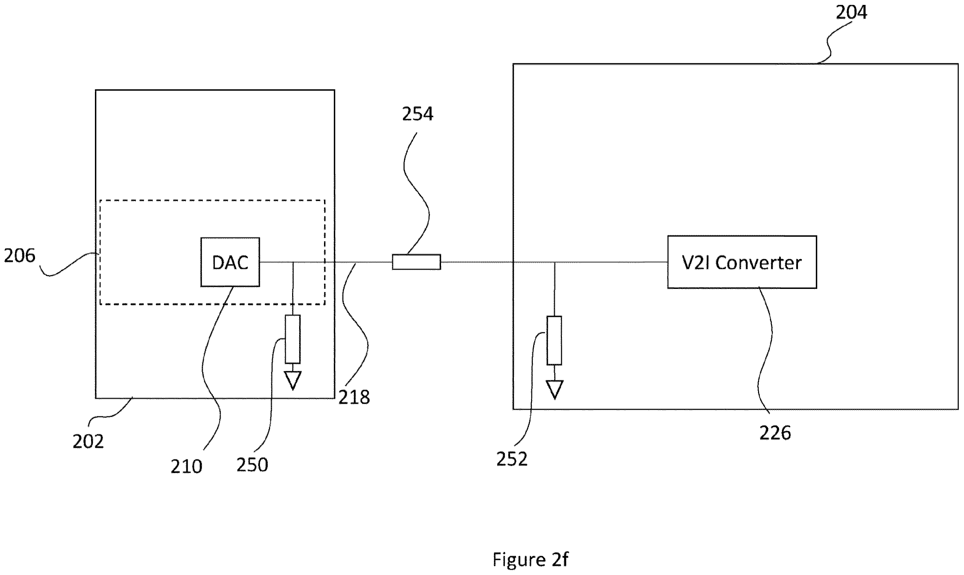

The laser driver 212 shown in figure 2 is a high-side laser driver, such that the laser driver 212 is coupled to the anode of the laser 214. The laser driver 212 may also be coupled to a positive voltage rail. The cathode of the laser 214 is coupled to a ground potential or ground node, or a reference voltage node.

The laser driver system 204 may include a number of other optional components 216, for example, a capacitor may be present between the positive and negative potentials or across the terminals of the laser. Whilst the laser 214 and optional components 216 are shown as part of the laser driver system 204, these components may be packaged separately or be external components coupled to the laser driver 212.

Figure 2b shows a further example of an iToF system in accordance with an aspect of this disclosure. The controller 206 of the imager 202 comprises a clock generator 230 and a digital to analog converter 210. The clock generator 206 outputs a digital image sensor control signal 219 and a digital laser control signal 222. The digital laser control signal 222 may be a clock signal. For example, the clock 230 may output a clock signal 219 indicative of a turn-on or turn-off time for the accumulation of charge by the image sensor, and a clock signal 222 indicative of a turn-on or turn-off time for the laser 214. The DAC 210 converts the digital laser control signal 222 to an analog laser control signal 218. The analog laser control signal 218 is provided to the laser driver system 204, and in particular to the laser driver 212 of the laser driver system 204. The laser driver 212 is configured to generate an analog laser drive current 220 capable of driving the laser 214 based on the analog laser control signal 218, such that a change in an amplitude of the analog laser control signal 218 causes a change in an amplitude of the analog laser drive current 220. The laser 214 receives the analog laser drive current 220 for driving the laser 214.

The image sensor control signal 219 may also be a clock signal output by the clock generator 230. The image sensor control signal 219 may have a lower frequency than the digital laser control signal 222. As such, the digital laser control signal 222 may be considered to contain more information than the image sensor control signal, allowing the analog laser control signal 218 to have a higher resolution or have a more complex analog waveform compared to the image sensor control signal 219.

Figure 2c shows an iToF system in accordance with an aspect of this disclosure where the laser driver 212 comprises a current mirror 224. The current mirror 224 may receive the analog laser control signal 218 and generate the analog laser driver current 220 based on the analog laser control signal 218. The current mirror 224 may be a multiplicative current mirror 224, such that the analog laser drive current 220 is a scaled replica of the analog laser control signal 218 with a magnitude greater than that of the analog laser control signal 218. Further, the current mirror 224 may be a push-pull current mirror 224.

The analog laser drive current 220 is a controlled current, as this is a more efficient way of driving the laser 214 compared to the supply of a laser drive voltage. The analog laser control signal 218 may be a current signal (where information is transmitted through the current of the analog laser control signal 218) or a voltage signal (where information is transmitted through the voltage of the analog laser control signal 218).

Where the analog laser control signal 218 is a voltage signal, a voltage-to-current converter 226 may be included in the laser driver 212, as shown in the example implementation represented in figure 2d. The voltage to current converter 226 receives the analog laser control signal 218 and converts it to a current signal 228. The current signal 228 is then supplied to the current mirror 224 for the generation of the analog laser drive current 220.

The imager 202 may include an AC snubber. For example, figure 2d shows the output of the DAC 210 coupled to an AC snubber 260, such that the analog laser control signal 218 output by the DAC passes through the AC snubber to the laser driver 212.

Figure 2e shows an example implementation of the iToF system 200 in which a constant current 232 is added to the current signal 228. The constant current may be supplied by a constant current source 234.

The analog laser control signal 218 in figures 2a-2e is depicted as a single-ended signal. However, the analog laser control signal 218 may be a differential signal comprising a first signal and a second signal. The current mirror 224 may convert the differential signal to a single-ended analog laser drive current 220. Alternatively, the analog laser drive current 220 may be a differential analog laser drive current 220. Where a constant current 232 is added to the current signal 228 of figure 2e and the current signal 228 is a differential signal, the constant current may be applied or added to one of the signals that make up the differential signal 228.

Further, rather than being supplied by a constant current source 234, the constant current 232 may instead be generated based on a sum of the two signals making up the analog laser control signal 218 or the current signal 228. This removes the need for an additional constant current source 234.

Figure 2f shows a simplified version of the diagram of figure 2e. A number of components have not been shown for clarity. An output of the imager 202 may be terminated by a termination impedance 250. An input of the laser driver system 204 may include an impedance termination 252. As such, the voltage received by the V2I converter 226 is the resulting combination of the termination impedance 250 of the imager 202, the termination impedance 252 of the laser driver system 204 and the routing between the two, the impedance of which is represented by reference numeral 254. Reflections may be minimised by matching the first 250 and second 252 termination impedances, for example by setting the first termination impedance 250 and the second termination impedance 252 to the same value.

Where the signal output by the DAC 210 is a differential signal, the imager 202 includes both a positive out and negative out terminal. Both of these terminals may include a termination resistor or impedance. Further, the laser driver system 204 would include both a positive in and negative in terminal. Both of these terminals may include a termination resistor or impedance.

Figures 2a-2f have been shown with a number of different components and varying combinations of components to allow the different features to be explained clearly. Where a component has been shown in only one of figures 2a-2f, the component may also be used in any other of figures 2a-2f. Further, where a property or feature is explained in only one of figures 2a-2f, it should also be understood that that property or feature may also apply to any of the other figures.

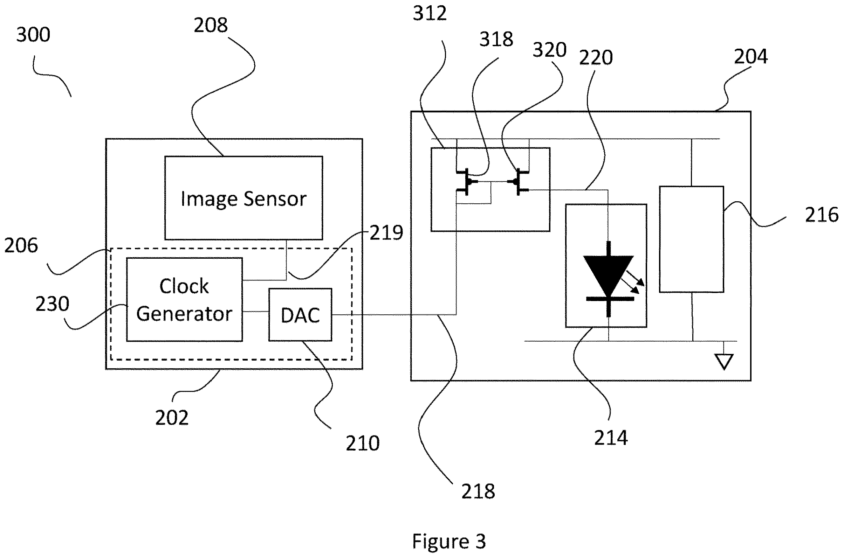

Figure 3 shows an example of an indirect time-of-flight (ToF) system 300 in accordance with an aspect of this disclosure. The laser driver 312 in figure 3 comprises a current mirror and is therefore similar to the arrangement of figure 2c. Figure 3 shows one particular type of current mirror that may be used, although any other type of current mirror may alternatively be used. The current mirror may be configured to generate the analog laser drive current 220 such that the analog laser drive current 220 is a scaled replica of the analog laser control signal 218.

For example, the current mirror includes a first transistor 318 and a second transistor 320. A source terminal of the first transistor 318 may be coupled to the output of the DAC 210, such that the first transistor 318 is configured to receive the analog laser control signal 218 from the DAC 210. The gate of the first transistor 318 is coupled to the gate of the second second transistor 320, such that the second transistor 320 produces the analog laser drive current. The drains of the first transistor and the second transistor are coupled to a positive or high voltage supply. The anode of laser 214 is coupled to the source second transistor 214 to receive the analog laser drive current.

The first transistor and the second transistor are shown as PMOS transistors.

The transistors may be any suitable form of transistor, for example, MOSFET devices or bipolar junction transistors (BJTs). Alternatively, the transistors may use other technologies, for example, Gallium Nitride, GaN, or Silicon Carbide, SiC. The current mirror may be a push-pull current mirror. While the current mirror has been shown to comprise two transistors, it should be understood that other current mirror technologies or layouts may be used in place of this current mirror, which is an example of one type of current mirror.

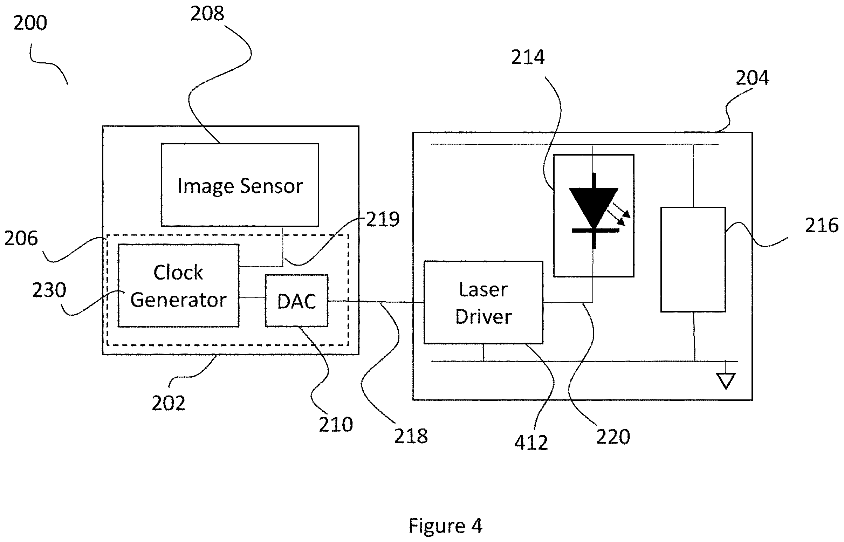

Whilst the systems of Figures 2a-2e and 3 include a high-side laser driver 212, 312, alternatively the system of any of these figures may include a low-side laser driver. For example, as shown in figure 4, the laser driver 412 may alternatively be a low-side laser driver 412, such that the laser driver 412 is coupled to a cathode of the laser 214. The laser driver 412 may be coupled to a negative or ground potential. In a low-side laser driver, the anode of the laser 212 may be coupled to a positive potential.

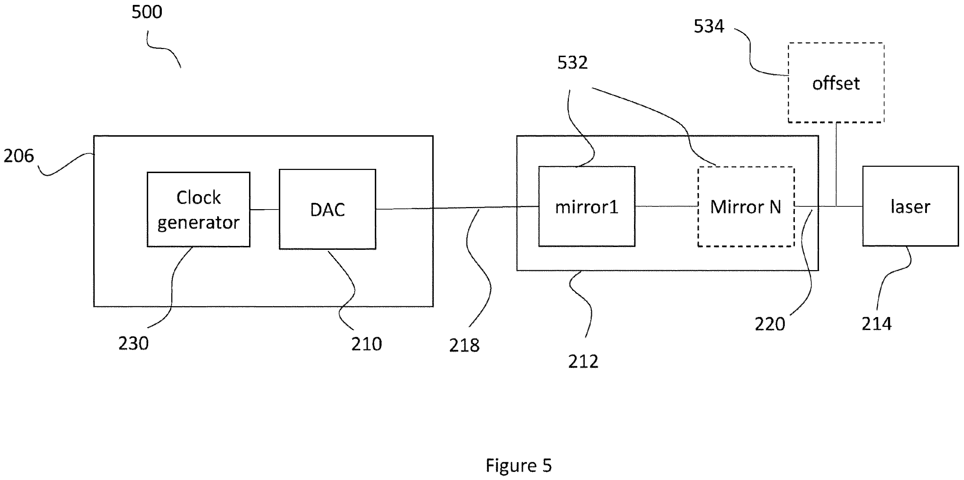

Figure 5 shows a simplified representation of the iToF systems shown in figures 2-4. The iToF system 500 of figure 5 comprises a controller 206, the controller 206 comprising a clock generator 230 and a DAC 210. The analog laser control signal 218 output by the DAC 210 is provided to the laser driver 212, which generates an analog laser drive current. The analog laser drive current is supplied to a laser 214 to drive the laser 214.

So as to generate an analog laser drive current 220 of sufficient magnitude to drive the laser 214, the laser driver 212 may comprise a plurality of current mirrors 532 configured to increase the amplitude of the analog laser drive current compared to that of the analog laser control signal.

The system 500 may further comprise an offset generation circuit 534 configured to apply an offset to the analog laser drive current 220.

Whilst shown in figure 5 as a single-ended signal, the analog laser control signal 218 output by the DAC 210 may be a differential analog laser control signal, and the analog laser drive current 220 generated by the laser driver 212 may be either a single-ended signal or a differential signal. Further, the current mirrors 532 may be differential current mirrors.

The current mirrors 532 may be active or passive current mirrors. The current mirrors may include a number of mirroring or copying stages. For example, there could be n mirrors or mirroring stages.

Whilst the above systems include the presence of a DAC in the imager, it is also possible to benefit from the system where the imager does not include a DAC.

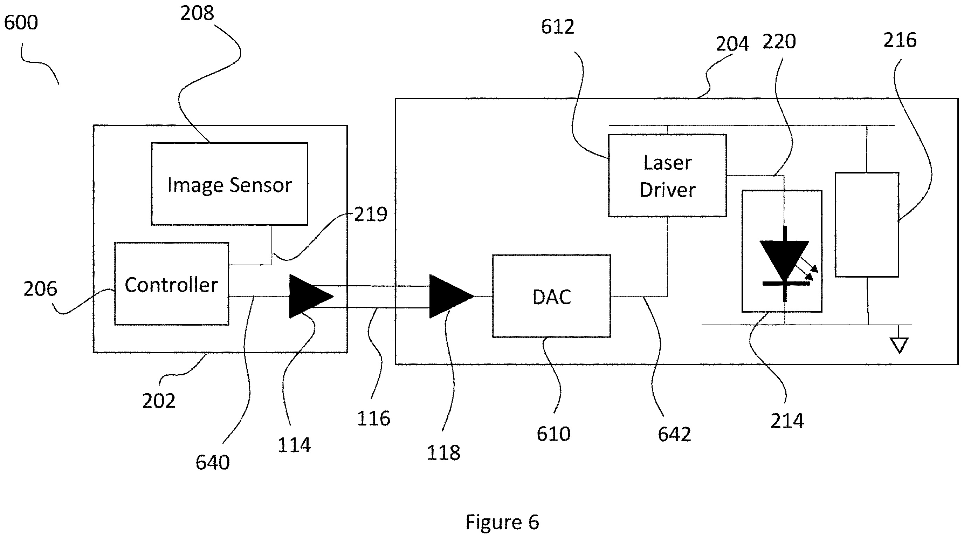

For example, figure 6 shows an indirect time-of-flight system 600 in accordance with an aspect of the disclosure, where the system 600 includes an imager 202 and a laser driver system 204. The imager 202 comprises a controller 206 and an image sensor 208. The controller 206 is configured to output a laser control signal 640 and an image sensor control signal 219. The controller 206 may include a clock generation circuit. The laser control signal 640 may be a digital signal, for example a clock signal generated by the clock generation circuit. The image sensor 208 is capable of receiving reflected laser light from the surrounding environment. The image sensor control signal 219 received by the image sensor 208 from the controller 106 controls an accumulation period in which the image sensor 208 accumulates charge received from incident light, for example light which has been reflected by objects in the surrounding environment.

The laser control signal 640 is supplied to the laser driver system 204. Figure 6 shows an example in which the single-ended laser control signal 640 output by the controller 106 is converted into a low-voltage differential signal 116 by system 114, and then converted back to a single-ended signal by system 118. However, alternatively the laser control signal generated by the controller 106 may be a differential signal. Further, the differential signal may not be converted back to a single-ended signal before it is supplied to the laser driver, and the laser driver 612 may receive a differential signal. In a further alternative, the single-ended laser control signal 640 may not be converted to a differential signal and may instead be output to the laser driver 204 as a single ended signal. The laser control signal 640 is a digital signal and is received by a laser driver system 204 and used to control the operation of a laser driver 612.

The laser driver 612 is a high-side laser driver configured to generate a laser driver current dependent on the laser control signal 640. The laser driver 612 may comprise a high-side drive current mirror configured to receive the laser control signal 640 and generate a laser drive current 220 which is supplied to the laser 214 so as to drive the laser 214. The high-side current mirror may be coupled to an anode of the laser 214. The current mirror may be a multiplicative push-pull current mirror, as described with respect to figures 2a-2e.

Where the laser control signal 640 supplied by the controller 206 is a digital laser control signal 640, the laser driver system 204 includes a digital-to-analog converter 610 (DAC). The DAC 610 is configured to receive the digital laser control signal 640 and output an analog laser control signal 642. The analog laser control signal 642 is received by the laser driver 612, which generates an analog laser drive current 220 based on the analog laser control signal 642 output by the DAC 610 (for example, it may be proportional to it), such that a change in an amplitude of the laser control signal 642 causes a change in an amplitude of the analog laser drive current 220.

Beneficially, high-side drive may allow the system to be arranged with minimised inductance and a large ground plane, at least because the high-side drive may be connected to a top surface connection of a VCSEL, with the VCSEL being mounted directly on the ground plane with a bottom surface connection of the VCSEL being connected to the ground plane. The large ground plane aids heat extraction and provides a shield that helps with electromagnetic emissions particularly if the majority of current can be provided locally to the same ground plane from the other components 216 e.g., a local capacitor.

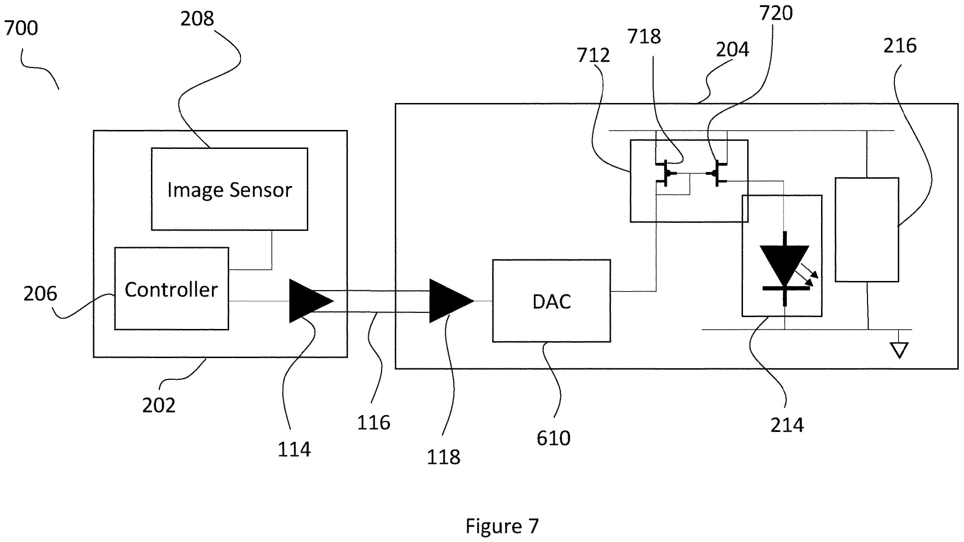

As shown in figure 7, the laser driver 712 of the indirect time-of-flight system 700 may comprise a current mirror. The current mirror may be of any suitable design. In the non-limiting example of figure 7 it is formed of a first transistor 718 and a second transistor 720 in the same layout as the current mirror described with respect to figure 3. The first transistor 718 is coupled to an output of the DAC 610 and configured to receive the analog laser control signal. The second transistor 720 is coupled to an anode of the laser 214 and configured to supply the analog laser drive current to the laser 214. The mirror may be a multiplying mirror, such that the magnitude of the laser drive signal is proportional to, but of a greater magnitude than, the analog laser control signal. For example, the mirror may introduce a gain. The laser driver 712 may operate in the same manner as any of the earlier described implementations of the laser driver 212. Whilst the current mirror 712 shown in figure 7 comprises two transistors, alternative high-side current mirrors may be used.

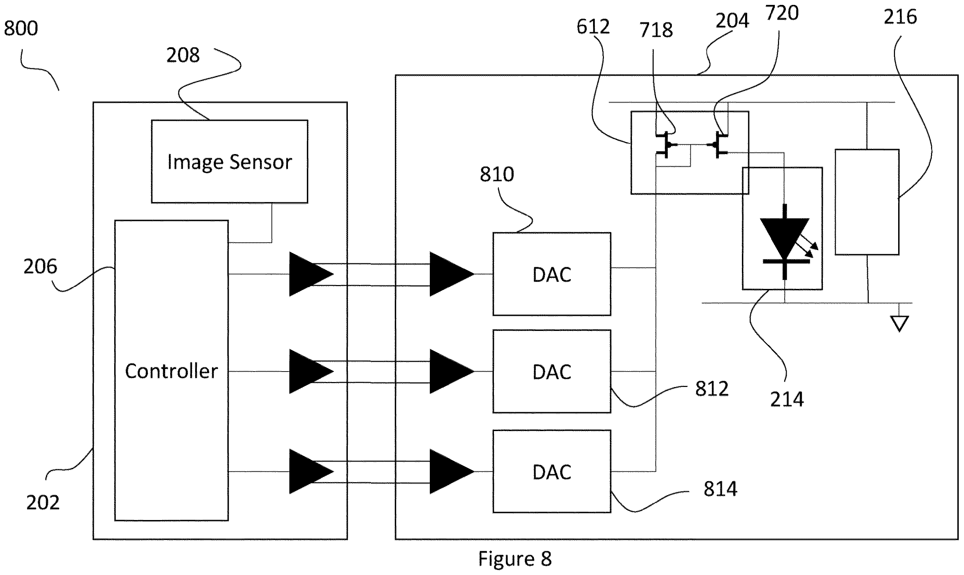

Whilst the controller of an iToF system may supply a single laser control signal to the laser driver, the controller 206 of the imager 202 may alternatively supply a plurality of laser control signals such as two, three, four or five laser control signals, as shown in figure 8. For example, the controller 206 of figure 8 provides three laser control signals to the laser driver system 204. Each of these laser control signals is received by a respective DAC of a plurality of DACs, 810, 812, 814, and converted to a respective analog laser control signal. These analog laser control signals may be used to drive a single laser, 214, for example by being supplied to a single laser driver 612. This may allow a greater current to be supplied to the laser.

Alternatively, the plurality of laser control signals may be used to reduce the effect of harmonics in the system when compared to the use of a single laser control signal. Ideally, a laser my be driven by a sinusoidal signal to minimise harmonic content. However, for ease, the system may instead use a square wave to drive the laser. A square wave might introduce harmonics which may decrease the accuracy of the ToF measurement. As such, the plurality of laser control signals may be configured such that the combination of the laser control signals reduces the harmonics. This may be achieved by setting each of the laser control signals such that they are square waves of different duty cycles, phases and/or amplitudes. When added together, this plurality of laser control signals better approximates a sinusoidal drive signal.

Alternatively, each of the laser control signals may be supplied to a separate laser driver, and used to control or drive one or more lasers. Further, each of the laser control signals may be supplied to a different terminal of the same laser. For example, where laser 214 is a two pad terminal VCSEL (eg, anode pads to which the laser driver currents may be supplied) , two laser control signals may be supplied from the controller to separate laser drivers 612. The respective laser drive currents generated may then be supplied to the respective anode pads of the VCSEL.

Whilst the concept of multiple laser control signals is described with respect to figure 8, where the DAC is located on the laser driver system 204, it may also be applied to the systems where an analog laser control signal is supplied from the imager 202 to the laser driver system 204, as outlined in any of figures 2-5.

### Operation of the Digital-to-Analog Converter

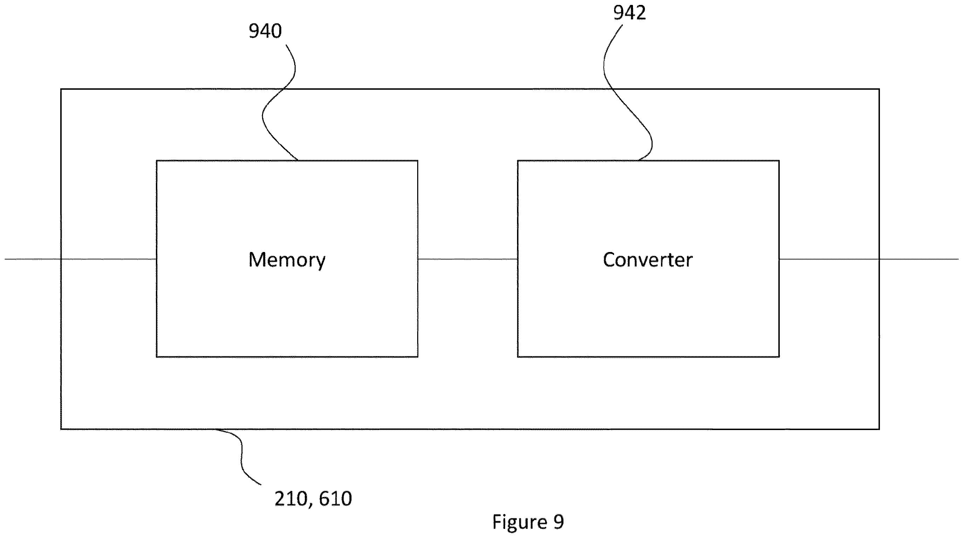

The digital-to-analog converter 210, 610 described above converts a digital laser control signal to an analog laser control signal. One example showing some details of a DAC 210, 610 is shown in figure 9. The DAC 210, 610 may comprise a memory 940 and a converter 942 for receiving a digital value output from the memory 940 and converting it to an analog value that is then output from the DAC 210, 610.

The memory 940 may store a plurality of ordered, digital, multi-bit words. For example, the memory 940 may be a cyclic memory. The memory 940 may be pre-loaded with the ordered multi-bit words during manufacture of the DAC 210, 610, or may be updated periodically during operation.

The DAC 210, 610 receives a digital laser control signal from the clock generator 230, for example the digital laser control signal may be a clock signal. On each pulse, transition or pattern (for example, each low-high and/ or high-low transition, or each set of pulses) of the digital laser control signal, the memory 940 is configured to output the next multi-bit digital word of the plurality of ordered digital words. Once the memory 940 reaches the end of the list of ordered digital words, it may cycle back to the start of the list, or repeat the list in reverse order. The multi-bit digital word is received by the converter 942, which is configured to convert the multi-bit digital word output by the memory 940 to an analog laser control signal. This allows the system to convert the digital signal output by the clock generator 230 to an analog signal.

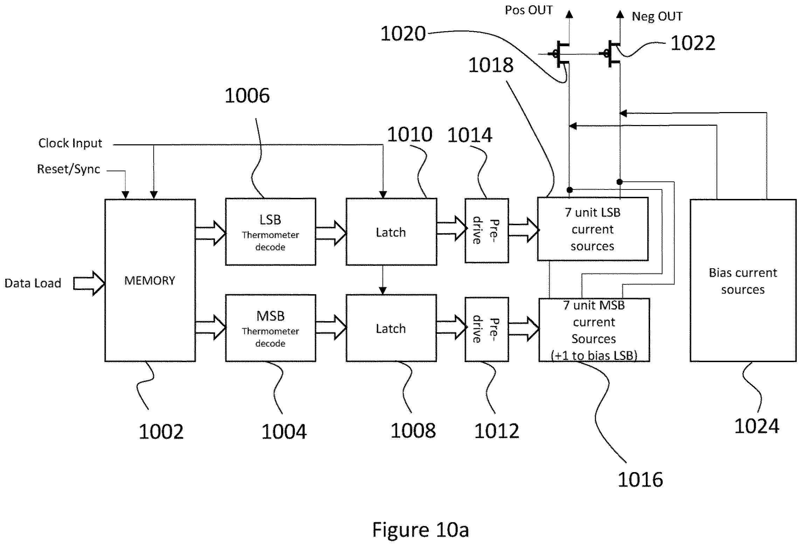

Figure 10a shows an example of a DAC 210, 610 arranged to receive a digital laser control signal, or control signal from the clock 230, and to output a differential output signal. The DAC includes a memory 1002. Data is loaded into the memory prior to the start of operation of the system, for example during calibration. The loaded data includes a plurality of binary words, for example 6bit words. Words of other lengths may be used, for example 4bit, 8bit, 10bit, 12bit words. The words are stored in the cyclic memory 1002.

The system receives a clock input or digital laser control signal, for example in the implementation of Figures 2b to 5, the DAC 210 receives the output of the clock generator 230 and in the implementation of Figure 6 the DAC 610 receives the digital laser control signal 116 (which may be a clock signal). The clock input causes the memory 1002 to output one of the stored words to the first thermometer decode 1004 and the second thermometer decode 1006. As the memory is cyclic, a different word is output each time the clock input is received, for example, each time an edge of the clock signal is received, or each time a number of pulses or edges of the clock signal are received.

The system shown in figure 10a is a 6bit DAC, however the DAC may operate with any number of bits. The DAC shown here is a current steering DAC that is segmented into a 3bit MSB or coarse array and a 3bit LSB or fine array, to ensure less elements are needed and the binary to thermometer decode needed to help linearity and glitches is the same for both. A different number of bits may be provided to each of the MSB and LSB array.

The most significant bits (for example the three most significant bits) of the output of the memory 1002 are provided to the first thermometer decode element 1004 and the least significant bits (for example the three least significant bits) of the output of the memory 1002 are provided to the second thermometer decode element 1006.

The output of the first thermometer decode element 1004 is provided to the input of a latch 1008. The output of the second thermometer decode element 1006 is provided to the input of a second latch 1010. The latches may also receive the digital laser control signal or clock signal as an input, providing a control/latch signal for the respective latches. The latches 1008, 1010 latch the outputs of the LSB thermometer decode 1006 and the MSB thermometer decode 1004.

The outputs of the latches 1008, 1010 are provided to inputs of respective pre-drive circuits 1012, 1014.

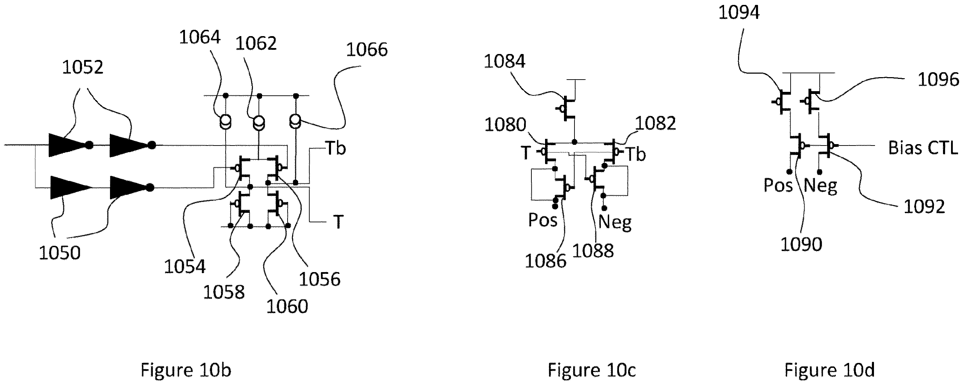

Figure 10b shows a non-limiting example implementation of a pre-drive circuit 1012, 1014. The pre-drive circuit generates a non-rail-to-rail differential signal which allows fast switching between two drive states. The current output as signals T and Tb transitions a current equal to the sum of current source 1064+1062 and a current equal to the current source 1064. The output of the respective latch 1008, 1010 is split into two signals. The polarity of the first signal inverted by gates 1050 and the polarity of the second signal is not inverted by gates 1052.

The pre-drive circuit includes a first transistor 1054, a second transistor 1056, a third transistor 1058 and a fourth transistor 1060. The transistors shown in figure 10b are PMOS transistors, however other transistors may be used, such as NMOS transistors and the skilled person will readily know of pre-drive circuit designs using NMOS transistors.

The gate of the first transistor 1054 is coupled to the output of the gates 1050. The gate of the second transistor is coupled to the output of the gates 1052. The sources of the first 1054 and second transistors 1056 are coupled to a first current source 1062 which is coupled to a high voltage supply rail. The drains of the first transistor 1054 and the second transistor 1056 are coupled to the sources of the respective third 1058 and fourth 1060 transistors and to respective outputs T and Tb. The drains of the third 1054 and fourth 1060 transistors are coupled to a low voltage supply rail.

A second current source is coupled to the drain of the first transistor 1054 and the output T. A third current source 1066 is coupled to the drain of the second transistor 1056 and the output Tb.

Each pre-drive circuit provides two outputs T and Tb. The outputs T and Tb of the first pre-drive circuit 1008 are supplied to the inputs of a first current source circuit 1016. The outputs T and Tb of the second pre-drive circuit 1014 are supplied to the inputs of the second current source circuit 1018.

Figure 10c shows a non-limiting example implementation of a current source circuit 1016, 1018.

The transistors may be sized differently depending on whether the current source circuit is acting on the MSB or LSB path of the DAC. For example, the transistors may be sized such that the width of the transistors is proportional to the current they drive.

The output T of the pre-driver circuit is supplied to the gate of a first transistor 1080. The output Tb of the pre-driver circuit is supplied to the gate of a second transistor 1082. The sources of the first transistor 1080 and the second transistor 1082 are coupled to the drain of a third transistor 1084. The source of the third transistor 1084 is coupled to a high supply voltage rail. The drains of the first transistor 1080 and second transistor 1082 are coupled to respective drains of a fourth transistor 1086 and a fifth transistor 1088. The body of the first transistor 1080 is coupled to a gate of the fifth transistor 1088. The body of the second transistor 1082 is coupled to a gate of the fourth transistor 1086. The drain of the fourth transistor 1086 supplies a positive differential output and the drain of the fifth transistor 1088 supplies a negative differential output.

The drain of the fourth transistor 1086 is coupled to the source of the fourth transistor 1086. Similarly, the drain of the fifth transistor 1088 is coupled to the source of the fifth transistor 1088. This compensates for the charge injection when the first transistor 1080 and second transistor 1082 change state. This allows a faster transition time.

The positive differential outputs of the first current source system 1016 and the second current source system 1018 are coupled together and coupled to the drain of a first output transistor 1020. The source of the first output transistor 1020 provides the positive out terminal for the DAC. The negative differential output signals of the first current source 1016 and the second current source 1018 are coupled together and coupled to the drain of a second output transistor 1022. The source of the second output transistor 1022 provides a negative out terminal for the DAC.

In some implementations, the output transistors may be thick oxide cascode devices. This means that the transient from the output should not affect the current driver. This may improve the stability of the current driver.

The system of Figure 10a may further include bias current source 1024 coupled to the respective drains of the output transistors 1020, 1022
Figure 10d shows one possible implementation of a bias current source circuit 1024. The bias current source includes a first transistor 1090 and a second transistor 1092. The gates of the first transistor 1090 and the second transistor 1092 are coupled to a bias control input, configured to activate and deactivate the bias current sources. The source of the first transistor 1090 is coupled to the drain of a third transistor 1094, and the source of the third transistor 1094 is coupled to a high voltage supply rail. The source of the second transistor 1092 is coupled to the drain of a fourth transistor 1096, and the source of the fourth transistor 1096 is coupled to the high voltage supply rail. The drains of the first transistor 1090 and second transistor 1092 provide pos and neg output current bias signals, and are coupled to the sources of the first output transistor 1020 and the second output transistor 1022 respectively.

Table 1 shows binary, unary, and unary-b formatted versions of the same numbers, representing the thermometer decoder operation. The unary values represent the output of the thermometer decoder.

**Table 1**

| Binary | Unary | Unary-b |
|---|---|---|
| 000 | 0000000 | 1111111 |
| 001 | 0000001 | 0111111 |
| 010 | 0000011 | 0011111 |
| 011 | 0000111 | 0001111 |
| 100 | 0001111 | 0000111 |
| 101 | 0011111 | 0000011 |
| 110 | 0111111 | 0000001 |
| 111 | 1111111 | 0000000 |

Figures 10a to 10d show just one, specific example DAC implementation for generating an analog laser control signal using a digital input. In these examples, the DAC uses cyclic memory that stores a plurality of digital words that are stepped through using a clock signal, and are then converted by the DAC to an analog signal having an amplitude that is defined by the stored digital words. In this way, specific analog signal shapes may be achieved for the analog laser control signal. It will be appreciated that Figures 10a to 10d show just one specific cyclic memory DAC implementation and there are many other ways of implementing the DAC and having the same functionality as described above in relation to Figure 10a. The DAC shown is a PMOS current source DAC which produces a current to be sourced with respect to ground, or a reference voltage. It may be used with a laser drive system that will be terminated to ground with a resistor, with the analog laser control signal coupled to a high side laser driver that comprises a current mirror.

For the earlier example implementations where current is driven directly to a high side mirror, the DAC may be made from an NMOS current source array that sinks current. Note that in this DAC implementation there may be a second DAC for providing DC current on both pos and neg outputs of the analog laser control signal, which is to help the next stage operate by providing some quiescent current. The bias current may be adjusted based on the level of the differential current. This is an optional additional feature and may be omitted, or may alternatively be included in the laser driver.

### Operation of the Laser Driver

As described previously, the laser driver may be a high-side laser driver 212, 312, 612, 712 comprising a current mirror and configured to generate an analog laser drive current for supplying to the laser 214.

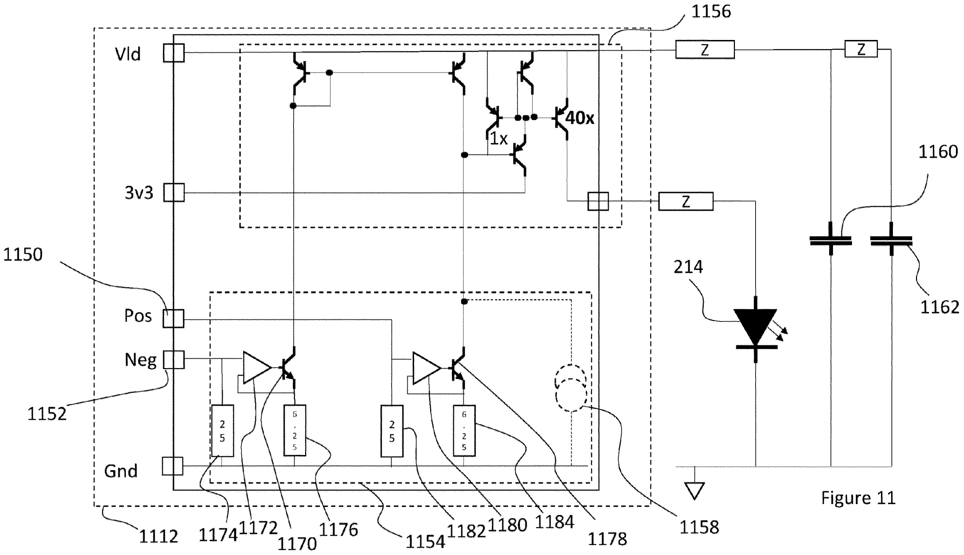

One non-limiting detailed example of a laser driver 1112 is shown in figure 11. Figure 11 includes a laser 214. In the example of figure 11, the analog laser control signal received by the laser driver 1112 is a differential current signal. The analog laser control signal may be provided by a current steering DAC, for example the DAC described in figure 10a. Alternatively, the analog laser control signal may be provided by a voltage DAC whose output is converted using a voltage to current converter, as shown in figure 2e. The input differential signal includes a first signal 1150 (which may be referred to as a positive signal) and a second signal 1152 (which may be referred to as a negative signal).

The laser driver 1112 includes a first gain stage 1154 that amplifies the differential signal and a second gain stage 1156 that generates a single-ended analog laser drive current from the amplified differential signal. The first gain stage 1154 is configured to add a constant current to one of the first signal 1150 and the second signal 1152. For example, the first gain stage 1154 includes a constant current source 1158 configured to add a constant current to the first signal 1150. Alternatively, the current source 1158 may be configured to add a constant current to the second signal 1152.

The constant current source 1158 is an optional component which may be used to increase the range of drive currents supplied to the laser 214. The inputs received at nodes 1150 and 1152 are differential signals and the current mirror 1156 is arranged to driver the laser using a current equal to a multiplied version of pos - neg. Where no current bias is added, pos - neg is negative for 50% of the time period. For example, where the pos signal ranges between 0mA and 100mA, and the neg signal ranges between 100mA and 0mA, pos - neg ranges between -100mA (when pos is 0mA and neg is 100mA) and 100mA (when pos is 100mA and neg is 0mA) over the time period. This results in a positive laser drive current being output by the current mirror 1156 for only 50% of the time period. The laser can therefore only be driven during this 50% of the time period.

To increase the proportion of the time period when the current output by the current mirror 1156 is positive, the current source 1158 may be arranged to add a current offset to one of the differential input signals. By adding a current offset to the pos input signal, the output pos - neg is positive for a greater period of time.

For example, where the pos signal ranges between 0mA and 100mA, and the neg signal ranges between 100mA and 0mA, the current source 1158 may be arranged to add a 50mA offset to the pos signal. This results in the output pos-neg ranging between -50mA and 150mA, increasing the amount of the time period that the pos-neg signal is a positive current and thus the amount of time that the laser 214 can be driven by a positive current.

The first gain stage includes a first transistor 1170, with the negative input 1152 coupled to the base of the transistor 1170 through an amplifier arrangement, including an amplifier 1172 and resistors 1174 and 1176. The first resistor 1174 is coupled between a low voltage supply, for example ground, and a first input of the amplifier 1172. A second input of the amplifier 1172 is coupled to an emitter of the first transistor 1170. The emitter of the first transistor 1170 is coupled via the second resistor 1176 to the low voltage supply. The resistors 1174 and 1176 are sized to provide amplification. In this particular example, the resistor 1174 is 25kOhms and the resistor 1176 is 6.25kOhms, providing a 4x amplification to the input signal. However, these resistance vales are merely exemplary and other values of resistance may be used in order to achieve a desired gain. The collector of the first transistor 1170 is coupled to the second gain stage 1156.

The same arrangement is provided for the positive input 1150, with the positive input 1150 coupled to second transistor 1178 through the second amplifier 1180, and resistors 1182 and 1184. The collector of the second transistor 1178 is coupled to the second gain stage 1156.

The second gain stage 1156 may comprise a current mirror configured to generate the analog laser drive current and supply this to the laser 214. The second gain stage 1156 includes one example of a current mirror that may be used to drive the laser 214. This current mirror may be arranged to provide, in this particular example, 40x amplification of the outputs of the first transistor 1170 and second transistor 1178. However, it may provide alternative amplification factors. The second gain stage 1156 receives a differential signal from the first gain stage 1154 and generates and outputs a single-ended analog laser drive current to drive the laser 214. Whilst the switches used in current mirror 1156 are shown as BJTs, MOS transistors, or any other suitable transistor type may be used instead.

As noted previously, a number of additional components 216 may be coupled across the laser 214. For example, a first capacitor 1160 and a second capacitor 1162 may be coupled across the laser 214.

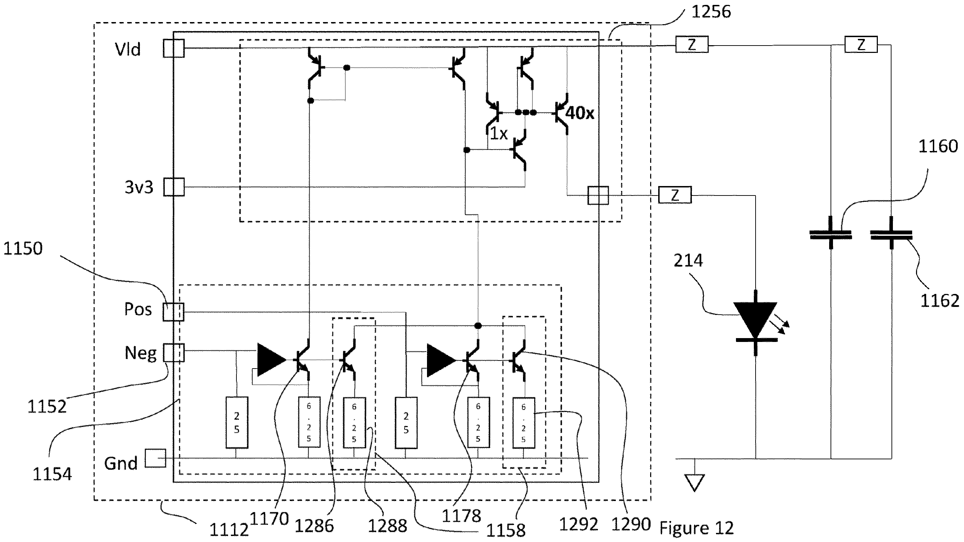

Figure 12 shows a modified example of the laser driver of figure 11, in which the first gain stage 1154 is modified to implement the constant current source 1158 using an additional pair of transistors. This constant current source generates an additional constant current which is added to the first 1150 signal (or alternatively the second 1152) signal by summing the first signal 150 and the second signal 1152. This implementation may be effective when the differential analog laser control signal formed by the first 1150 and second 1152 signals has a constant summed current (i.e., the sum of the currents of the first 1150 and second 1152 signals is constant) for example because it is generated by, and output from, a current steering DAC.

The constant current source 1158 includes a third transistor 1286. The base of the third transistor 1286 is coupled to the base of the first transistor 1170. A resistor 1288 is coupled between the emitter of the third transistor 1286 and the low voltage supply rail. The constant current source 1158 includes a fourth transistor 1290. The base of the fourth transistor 1290 is coupled to the base of the second transistor 1178. A resistor 1292 is coupled between the emitter of the fourth transistor 1290 and the low voltage supply rail. The collectors of the third 1286 and fourth 1290 transistors are coupled to the collector of the third transistor 1178, adding a constant current to the current at the collector of the third transistor 1178. In this particular example, the resistors 1288 and 1292 are both 6.25kohms, such that the constant current is 4x the sum of the input pos and neg current. However, this is only one example of resistance values and any other suitably sized resistors may be used depending on the required gain.

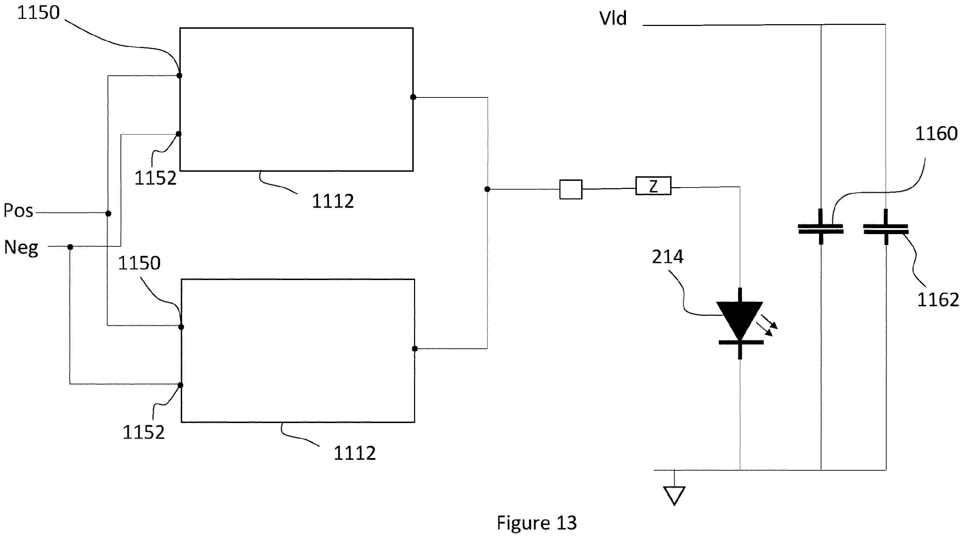

Figure 13 shows a double-sided laser driver architecture, which includes two laser drivers 1112, for example the laser drivers 1112 as shown in figures 11 or 12, coupled to the same laser 214. The first and second laser drivers 1112 may be identical. This allows the system to provide a greater current to the laser 214.

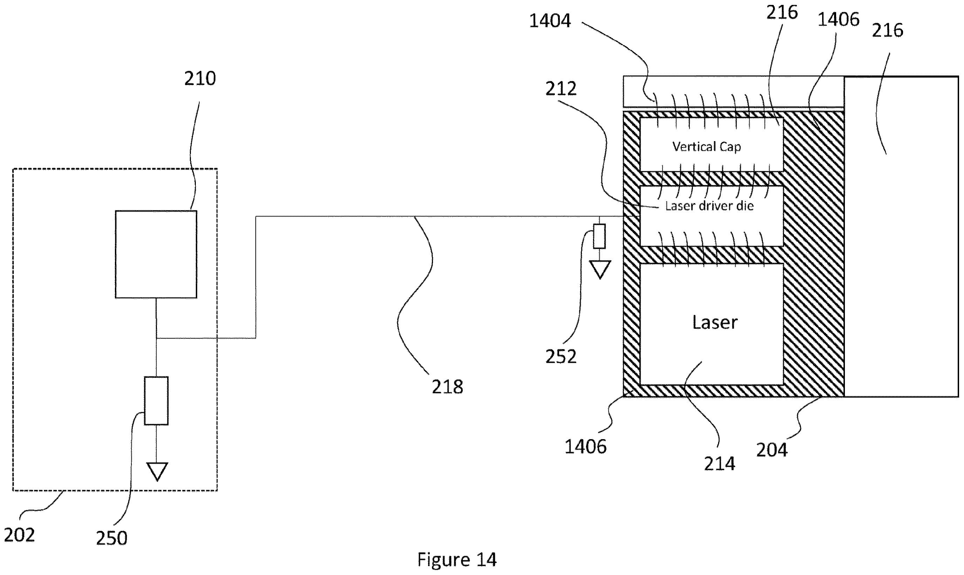

Figure 14 shows a system layout where the imager 202 includes a DAC 210 coupled to an on-chip termination resistor or impedance 250. The termination impedance 250 may alternatively be an off-chip termination impedance 250. The laser driver system 204 receives the control signal 218 from the imager 202. The laser driver system 204 may include a termination resistor (or impedance) 252, which may be either on-chip or off-chip. The laser driver system 204 of figure 14 includes a laser 214, for example, a VCSEL. The laser 214, laser driver die 212 and vertical capacitor 216 are coupled together using bond wires 1404.

The system may include two capacitors 216. One may be positioned near to the laser driver 212 and may be a vertical capacitor (vertical cap). Where the laser driver 212 is a high-side drive system, the vertical capacitor positioned near to it allows the connections between the laser driver 212 and the vertical capacitor 216 to be between the upper surfaces of the laser driver 212 and capacitor 216, minimising the size of the inductive loop. Lower surfaces or terminals of the laser driver 212 and vertical capacitor 216 may be coupled to a ground plane 1406. As the components may be coupled to a ground plane, greater heat dissipation may be achieved. The second capacitor 216 may be a larger capacitor positioned further from the laser 214.

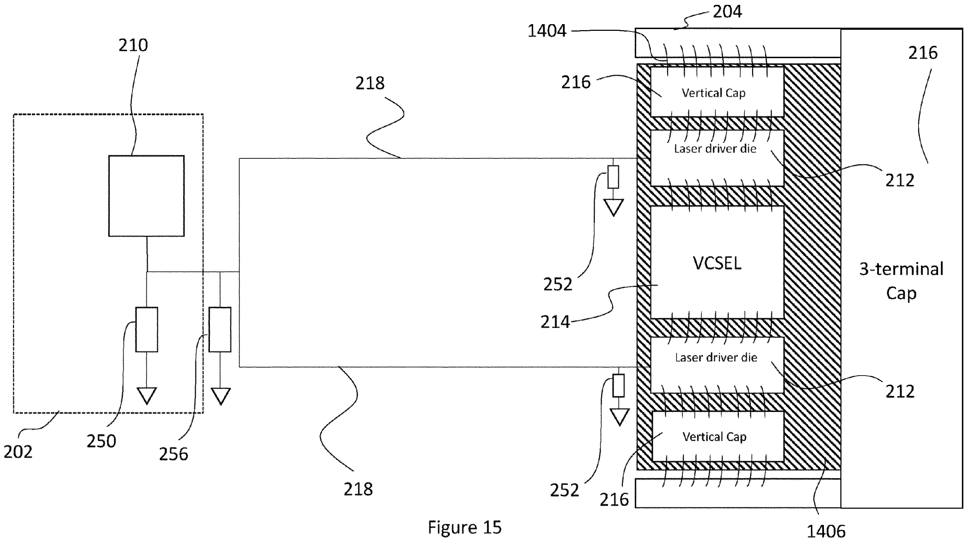

Figure 15 shows a system which includes a three terminal laser 214. The three terminal laser 214 may be a VCSEL. Two laser drivers 212 are used, one positioned to each side of the VCSEL 214, driving each drive terminal of the VCSEL. The laser drivers 212 may be the laser drivers described in any of the previous examples, such as the laser drivers of figures 11 or 12. The VCSEL 214 is also connected to a ground plane 1406 using a third terminal on the lower surface of the VCSEL. The output from the DAC 210 of the imager 202 may be split such that it comprises two analog laser control signals 218. These signals may then be provided to each of the multiple laser drivers 212. Further, the imager 202 may include both on chip termination 250 and off-chip termination 256. In this manner, the laser drivers 212 and imager 202 described in previous embodiments may be used to drive a two terminal laser 214.

The termination resistors 252 may be matched such that they have impedances within a tolerance of 1% of each other. The termination resistors 252 may alternatively be matched such that they have impedances within a tolerance of 2%, 5%, or 10% of each other.

Other systems, not limited to a two terminal laser may include multiple laser drivers, for example multiple laser drivers coupled to the same laser or multiple lasers.

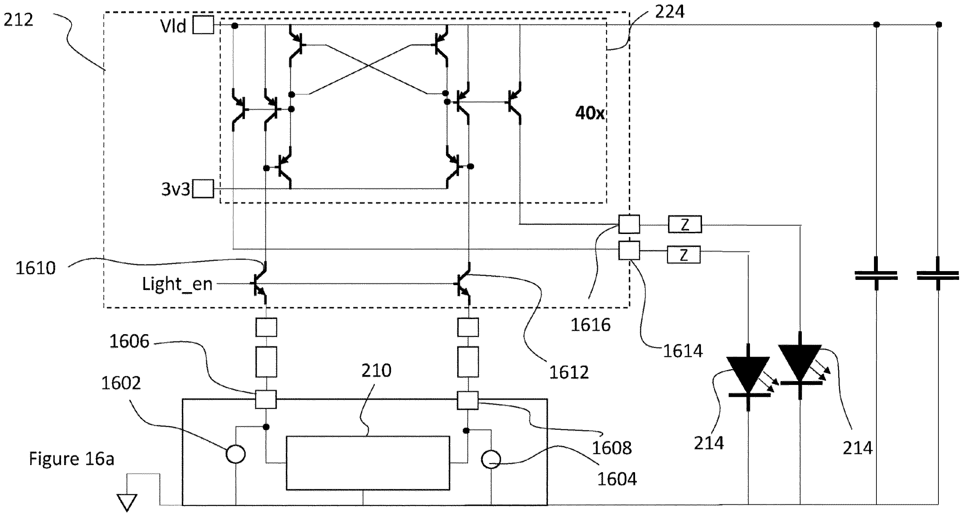

Figure 16a shows a ToF system including a DAC 210, and laser driver 212. The system may be configured to drive two lasers 214.

The DAC 210 (which may be on the imager 202 or the laser driver system 204) may output a differential analog laser control signal 218. For example, the DAC 210 may be the DAC of figure 10a. The DAC 210 comprises a pos or first output 1606 and a neg or second output 1608. The DAC 210 is a current steering DAC. A first current source 1602 is coupled to the first output 1606 and configured to add a first current bias to the first signal. A second current source 1604 is coupled to the second output 1608 and configured to add a second current bias to the second signal. Adding a current bias to the first output 1606 and the second output 1608 provides a minimum output or bias current to each of the first 1606 and second 1608 outputs.

The first signal and the second signal of the differential analog laser control signal 218 may be in antiphase to one another. As the DAC is a current steering DAC, the current draw to drive the two lasers may therefore be constant.

The differential output of the DAC 210 is provided to a laser driver 212. The first signal may be received at the emitter of a first enable transistor 1610. The second signal may be received at the emitter of a second enable transistor 1612. The bases of the first 1610 and second 1612 enable transistors may receive an enable signal. The enable transistors act as a safety system, allowing the output of the DAC to be provided to the current mirror 224 only when the enable signal is high. The enable signal may be enabled only when it is safe for the system to output light. It will be appreciated that the enable signal and transistors 1610 and 1612 are optional and the differential signal may instead be directly coupled to the current mirror 224.

In the enable signal example of Figure 16a, the collectors of the first enable transistor 1610 and the second enable transistor 1612 are coupled to a current mirror 224. The current mirror 224 is arranged to provide a first laser drive current 1614 and a second laser drive current 1614 based on the first 1606 and second 1608 signals of the analog laser control signal. The laser driver 212 in this example generates two laser drive currents or signals based on the respective signals of the differential analog laser control signal 218. Each of these laser drive currents may be supplied to a respective laser 214, driving each of the lasers 214. The laser drive currents 1614, 1616 supplied to the first and second lasers 214 may also be considered to be differential signals, such that the first laser is driven by a first signal of the differential laser drive current and the second laser is driven by a second signal of the differential laser drive current, which is in anti-phase to the first signal. The cross-coupling of the current mirror 224 has the effect that the transition from low-to-high should be the same as the transition from high-to-low by virtue of generating a push-pull drive at the base or gate of the output transistors. The laser driver 212 included in Figure 16A is one example of a laser driver. It is clear that other laser drivers may be used in this figure.

The two lasers 214 may be directed to image different scenes, for example, to determine the distance to different objects. By driving the two lasers using a single laser driver 212 which outputs a differential laser drive signal, the system may achieve a constant current draw from the supply by driving the first laser and the second laser 180° out of phase.

Each laser in this case would be driven in anti-phase. If the same laser and laser optics were driven by phase and anti-phase signals, illuminating the same scene would not be beneficial as the transmitted signals would sum to a constant power. However, when using different lasers or different optics, driving the two lasers in phase and anti-phase can be beneficial. For example, the two lasers may have different wavelengths and there could be two different imaging sensors looking at the same scene, so that phase differences between emitted and imaged light for two different wavelengths (as is typically required in CW ToF system for phase unwrapping) may be determined more quickly since the two phases are essentially operating in parallel. By driving the two lasers in phase and anti-phase, the common power supply sees less current modulation and is easier to drive. The laser driver cost (area/power) is also partially shared between the two lasers.

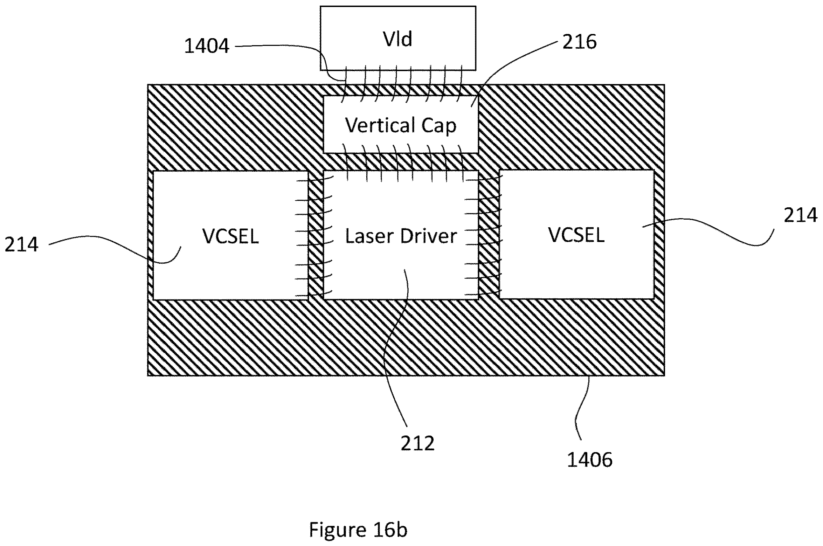

Figure 16b shows a schematic layout of the system of figure 16a. The laser driver 212 includes bond wires 1404 coupling the outputs of the laser driver to the terminals of respective lasers 214, such as VCSELs. The cathodes of the lasers 214 are coupled to and share a common ground plane 1406 along with a vertical capacitor 216 that decouples the laser driver supply. As the ground plane 1406 is shared between the components, the size of the interconnects between the components are reduced, reducing loop inductances for any switching transients and providing a large surface for heat sinking.

The previously described circuits show systems which include a capacitor 216, laser driver 212 and laser 214. The arrangement of these components may provide improved circuit operation.

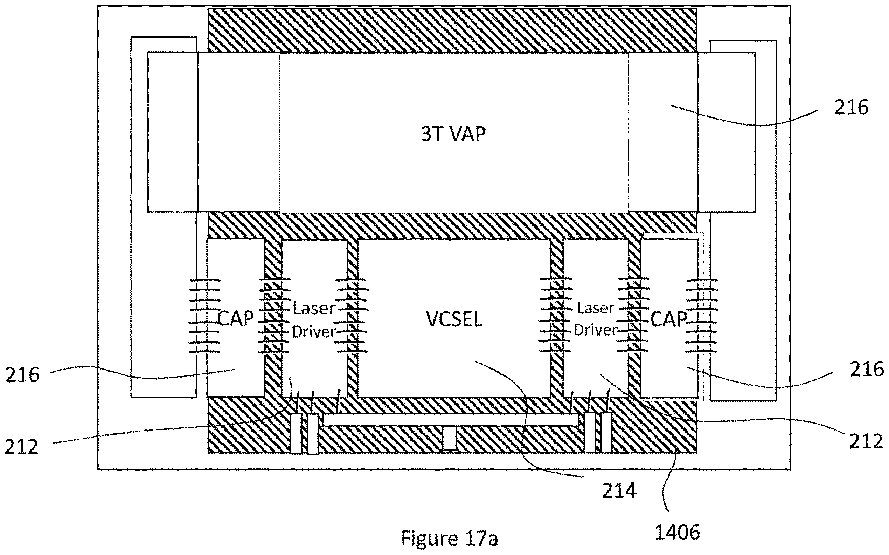

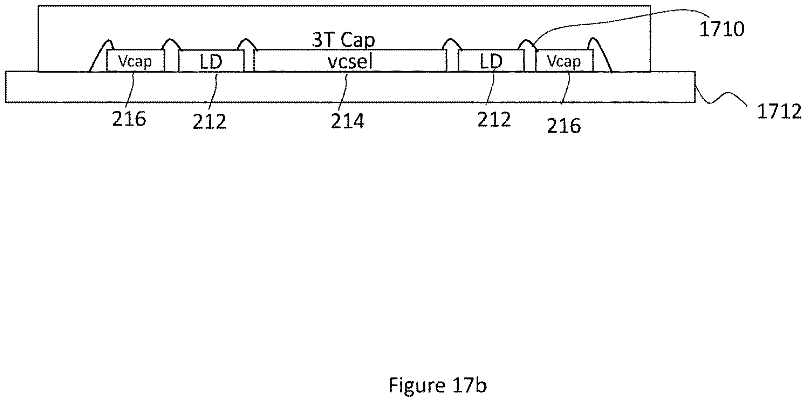

Figure 17a shows a layout view of the connection of two vertical capacitors 216, two laser drivers 212 and a two terminal VCSEL 214, where the respective laser drivers 212 drive respective terminals of the VCSEL 214, however this arrangement also applies to systems which include a single vertical capacitor 216, a single laser driver 212 and laser 214. The cross section of figure 17 is in the same layout as that of figure 15. As can be seen, the vertical capacitor 216, laser driver 212 and laser 214 are connected together in series using connection portions such as bond wires 1710. The vertical capacitor may be used as capacitor 216 in any of the preceding examples. For example, a vertical capacitor may be used in the implementations of figures 14 or 15 to minimise the size of the current loop, compared to situations in which a vertical capacitor is not used.

Figure 17b shows an alternative perspective of the system of Figure 17A, looking at the system from the side rather than from above. The top of the capacitor 216, laser driver 212 and laser 214 may be positioned such that they are level or at the same height above the substrate. It will be appreciated that positioning the three components next to each other in this fashion beneficially reduces the size of the current loop created even where the components are not at exactly the same height. Keeping the height of the laser 214 and the capacitor 216 at the same level ensures that a very short connection 1710 is present between the laser 214, laser driver 212 and the capacitor 216. The length of the bond wire connecting 1710 may therefore be minimised by virtue of the bond wire having to travel less vertical distance and allowing the laser 214 and capacitor 216 to be positioned close to each other. This minimises parasitic inductance associated with the bond wires, and reducing the size of the loop, further reducing inductance.

Current may travel between these components through the short connections 1710. The return path may be located in a ground plane 1712 provided on the substrate. This ensures a small loop and provides cancellation of electromagnetic emissions. A first side of each of the components may be coupled to the ground plane. A second side of each of the components may be coupled to each other in series. The use of a single ground plane to connect the capacitor 216, laser driver 212 and laser 214, rather than individual ground connections, improves heat dissipation. As the ground plane spans all of the capacitor 216, laser driver 212 and laser 214, it provides a large area of conductive material through which heat may be dissipated.

So that the top of the capacitor 216, the laser 214 and the laser driver 212 are the same level, a height adjustment member, slug or shim may be placed under either the laser 214, the capacitor 216 or the laser driver 212.

Whilst this arrangement is shown with respect to the system of figure 15, it should be seen that the capacitor 216, laser driver 212 and laser 214 of any of the preceding examples may be positioned such that they are located on the same ground plane, with connections between the components of the same height effected through short bond wires.

The preceding examples are described with respect to an indirect time of flight, iToF system. However, it should be understood that they could equally be applied to a dToF, or direct time of flight system. Particularly in the examples of figures 6, 7 and 8, where the DAC is located in the laser driver system, the same high side drive system and packaging described with relation to figures 14, 15 and 17 above may be used for the dToF system. Some or all of these techniques could be applied to a dToF system.

Whilst the description refers to attributes of the signals being provided from the imager to the laser driver, or between components within the imager or laser driver, as being a voltage or current, the signal may be transposable between current to voltage or voltage to current at different points within the signal path between the DAC and the laser. The DACs in any of the preceding examples may be voltage DACs, not current DACs, and may output a voltage signal. For example, the DAC 210 of figure 4 may receive a voltage signal from the clock generator 230 and may output a voltage analog laser control signal 218. The laser driver 412 receives the voltage analog laser control signal and may operate to convert this to a current before driving the laser with a current or may provide a voltage signal to the laser 214. Each component within the system may receive a voltage or current signal and output a voltage or current signal. Further, where the DAC is a current DAC, it may be terminated using a resistor and thus the output may be a voltage. Further, the mirroring or copying stages or mirror may receive a voltage signal and convert this, in the mirroring process, to a current signal.

The controller 206 described in previous examples may include a clock generator 230 and a DAC 210, as shown in Figure 4. Alternatively, the clock generator may be located external to the controller 206 and the imager 202. For example, the imager 202 may receive a clock signal from an external source, for example it may receive a shared clock signal from within a larger system in which the imager is located.

The skilled person will readily appreciate that various alterations or modifications may be made to the above described aspects of the disclosure without departing from the scope of the disclosure.

### Aspects of the Disclosure:

### First set of aspects:

1. An indirect time-of-flight, iToF, system comprising:
   an imager, the imager comprising:
      a controller configured to generate an analog laser control signal and an image sensor control signal; and
      an image sensor for accumulating charge based on received incident light, wherein the image sensor is configured to receive the image sensor control signal for controlling a timing of charge accumulation of the image sensor;
   a laser driver coupled to the imager, wherein the laser driver is configured to receive the analog laser control signal and generate an analog laser drive current using the analog laser control signal, wherein the laser driver is configured to generate the analog laser drive current such that any change in an amplitude of the analog laser control signal causes a change in an amplitude of the analog laser drive current; and
   a laser coupled to the laser driver, wherein the laser is configured to receive the analog laser drive current for driving the laser to emit light.
2. The iToF system according to aspect 1, wherein the laser driver comprises a current mirror configured to:
   receive a current signal that is dependent on the analog laser control signal; and
   generate the analog laser drive current by mirroring the received current signal.
3. The iToF system according to aspect 2, wherein the current mirror is a multiplicative current mirror.
4. The iToF system according to any of aspects 2 or 3, wherein the current mirror is a push-pull current mirror.
5. The iToF system according to any of aspects 2 to 4, wherein the analog laser control signal is a differential signal, the current signal received by the current mirror is a differential signal and the analog laser drive current is a single ended signal.
6. The iToF system according to aspect 5, wherein the driver is further configured to add a constant current to one side of the differential current signal received by the current mirror.
7. The iToF system according to aspect 6, wherein the laser driver further comprises a current source configured to generate the constant current.
8. The iToF system according to aspect 6, wherein the imager is configured to output the constant current to the laser driver.
9. The iToF system according to aspect 6, wherein the laser driver is configured to generate the constant current based on a summation of the two signals making up the differential analog laser control signal.
10. The iToF system according to aspect 6, wherein the laser driver is configured to generate the constant current based on a summation of signals generated using the two signals making up the differential analog laser control signal.
11. The iToF system according to any of aspects 6 to 10, wherein the constant current is greater than or equal to an absolute value of a difference between the two signals making up the differential current signal received by the current mirror.
12. The iToF system according to any of aspects 5 to 11, wherein the analog laser control signal is a current signal, and
   wherein the imager is configured to generate the analog laser control signal such that a sum of the two signals making up the differential analog laser control signal is constant.
13. The iToF system according to aspect 12, wherein the imager comprises a current steering DAC that is configured to generate the analog laser control signal.
14. The iToF system according to any of aspects 2 to 13, wherein the driver further comprises a voltage-to-current, V2I, converter configured to:
   receive a voltage signal that is dependent on the analog laser control signal;
   generate the current signal based on the received voltage; and
   output the generated current signal to the current mirror.
15. The iToF system according to aspect 14, wherein the analog laser control signal is a voltage signal and the voltage signal received by the V2I converter is the analog laser control signal.
16. The iToF system of aspect 14, wherein the analog laser control signal is a current signal, and
   wherein laser driver comprises an impedance termination for the analog laser control signal, and
   wherein the voltage signal received by the V2I converter is a voltage across the impedance termination.
17. The iToF system according to any of aspects 2 to 13, wherein the analog laser control signal is a current signal, and
   wherein the current signal received by the current mirror is the analog laser control signal.
18. The iToF system according to aspect 17, wherein the imager further comprises an AC snubber coupled to an output of the DAC such that the analog laser control signal output by the DAC passes through the AC snubber to the laser driver.
19. The iToF system according to any preceding aspect, wherein the controller comprises:
   a digital-to-analog converter, DAC, configured to generate the analog laser control signal,
   wherein the DAC is configured to receive a first clock signal for use in generating the analog laser control signal.
20. The iToF system according to aspect 19, further comprising a clock generator configured to generate the first clock signal.
21. The iToF system according to aspect 20, wherein the clock generator is configured to generate a second clock signal, and wherein the second clock signal is the image sensor control signal.
22. The iToF system according to aspect 21, wherein the first clock signal has a higher frequency than the second clock signal.
23. The iToF system according to any of aspects 19 to 22, wherein the DAC comprises:
   a memory configured to store a plurality of ordered multi-bit digital words,
   wherein the memory is configured to receive a first clock signal and on each pulse of the clock signal, output a next multi-bit digital word of the plurality of ordered digital words, and
   wherein the DAC is configured to generate the analog laser control signal by converting the multi-bit digital word output by the memory.
24. The iToF system according to any of aspects 19 to 23, wherein the DAC is configured to receive a multi-bit digital word and generate the analog laser control signal by converting the received multi-bit digital word.
25. The iToF system according to any preceding aspect, further comprising one or more additional laser drivers coupled to the laser, wherein each of the additional laser drivers are configured to receive the analog laser control signal and generate an additional analog laser drive current, wherein an amplitude of the additional analog laser drive current is proportional to the amplitude of the analog laser control signal, the one or more additional laser drivers.
26. The iToF system according to any preceding aspect, wherein the imager is in a first voltage domain and the laser driver is in a second voltage domain, wherein the first voltage domain and the second voltage domain are different.
27. A laser driver for use in an indirect time-of-flight, iToF, system that comprises an imager and a laser, the laser driver being configured to:
   generate an analog laser current having an amplitude that is substantially proportional to an amplitude of an analog laser control signal received from the imager; and
   output the analog laser current to the laser for driving the laser to emit light.
28. The laser driver according to aspect 27, wherein analog laser control signal is a current signal.
29. The laser driver according to aspect 27 or aspect 28, wherein the laser driver comprises a current mirror configured to receive the current signal and generate and output the analog laser drive current.
30. The laser driver according to aspect 29, wherein the current mirror is a multiplicative current mirror.
31. The laser driver according to aspect 29 or aspect 30, wherein the current mirror is a push-pull current mirror.
31. The laser driver according to aspect 27, wherein the analog laser control signal is a voltage signal.
32. The laser driver according to aspect 31, wherein the laser driver further comprises a voltage-to-current converter configured to receive the analog laser control signal and convert the analog laser control signal to a current signal.
33. The laser driver according to aspect 32, wherein the laser driver further comprises a current mirror configured to receive the current signal and generate the analog laser drive current.
34. The laser driver according to any of aspect 27-33, wherein the laser driver is a high-side laser driver coupled to an anode of the laser.
35. The laser driver according to any of aspects 27-34, wherein the analog laser control signal is a differential signal, and the analog laser drive current generated by the laser driver is a single-ended signal that is proportional to the differential signal.
36. The laser driver according to aspect 35, wherein the laser driver is configured to add a constant current to one of the signals making up the analog laser control signal
37. The laser driver according to aspect 36, wherein the laser driver comprises a constant current source for generating the constant current.
38. The laser driver according to aspect 36, wherein the laser driver is configured to generate the constant current based on a sum of the two signals making up the analog laser control signal.
39. An imager for use in an indirect time-of-flight, iToF, system, the imager comprising:
   a controller configured to generate an analog laser control signal and an image sensor control signal; and
   an image sensor for accumulating charge based on received incident light, wherein the image sensor is configured to receive the image sensor control signal for controlling a timing of charge accumulation of the image sensor;
   wherein the imager is for coupling to a laser driver, and wherein the imager is configured to output the analog laser control signal to the laser driver.
40. The imager according to aspect 39, wherein the controller comprises:
   a digital-to-analog converter, DAC, configured to generate the analog laser control signal.
41. The imager according to aspect 40, wherein the DAC comprises:
   a memory configured to store a plurality of ordered multi-bit digital words,
   wherein the memory is configured to receive a clock signal and on each pulse of the clock signal, output a next multi-bit digital word of the plurality of ordered digital words, and
   wherein the DAC is configured to generate the analog laser control signal by converting the multi-bit digital word output by the memory.
42. The imager according to aspect 41, further comprising a clock generator configured to generate the clock signal.
43. The imager according to aspect 41, wherein the DAC is configured to receive a multi-bit digital word and generate the analog laser control signal by converting the received multi-bit digital word.
44. The imager according to any of aspects 40 to 43, wherein the imager further comprises an AC snubber coupled to an output of the DAC such that the analog laser control signal output by the DAC passes through the AC snubber to the laser driver.
45. An indirect time-of-flight, iToF, system comprising:
   an imager, the imager comprising:
      a controller configured to output a laser control signal and an image sensor control signal; and
      an image sensor for accumulating charge based on received incident light, wherein the image sensor is configured to receive the image sensor control signal for controlling a timing of charge accumulation of the image sensor;
   a laser driver configured to receive the laser control signal, the laser driver comprising:
      a high-side multiplicative push-pull current mirror, the current mirror configured to generate a laser drive current based on the laser control signal; and
      a laser comprising an anode that is coupled to the laser driver, wherein the laser is configured to receive the laser drive current for driving the laser to emit light.
46. The iToF system according to aspect 45, wherein the laser control signal is a differential signal, and the laser drive current generated by the laser driver is a single-ended signal that is proportional to the differential signal.
47. The iToF system according to aspect 46, wherein the laser driver further comprises a voltage-to-current converter configured to receive the laser control signal and convert the laser control signal to a differential current signal.
48. The iToF system according to aspect 47, wherein the current mirror is configured to receive the differential current signal and generate the analog laser drive current based on the differential current signal.
49. The iToF system according to aspect 48, wherein the laser driver is configured to add a constant current to one of the signals making up the analog laser control signal.
50. The iToF system according to any of aspects 45-49, wherein the laser control signal is a digital laser control signal, and the high-side laser driver further comprises:
   a digital-to-analog, converter, DAC, configured to receive the digital laser control signal and generate an analog laser control signal using the digital laser control signal,
   wherein the high-side laser driver is configured to generate the laser drive current to have an amplitude that is proportional to the analog laser control signal.
51. The iToF system according to aspect 50, wherein the DAC is configured to generate the analog laser control signal by converting the digital laser control signal.
52. The iToF system according to aspect 50, wherein the DAC comprises:
   a memory configured to store a plurality of ordered multi-bit digital words,
   wherein the digital laser control signal comprises a clock signal, and
   wherein on each pulse of the clock signal, memory is configured to output a next multi-bit digital word of the plurality of ordered digital words, and
   wherein the DAC is configured to generate the analog laser control signal by converting the multi-bit digital word output by the memory.
53. The iToF system according to any of aspects 45-52, further comprising one or more additional high-side laser drivers coupled to the anode of the laser, wherein each of the additional laser drivers are configured to:
   receive the laser control signal;
   generate an additional laser drive current; and
   output the additional laser drive current to the anode of the laser.
54. A high-side laser driver for use in an indirect time-of-flight, iToF, system that comprises an imager and a laser, the laser driver being configured to receive a laser control signal from the imager, wherein the laser driver comprises:
   a high-side multiplicative push-pull current mirror, the current mirror configured to generate a laser drive current based on the laser control signal, and
   wherein the high-side multiplicative push-pull current mirror is configured to output the laser drive current to an anode of the laser for driving the laser to emit light.
55. The high-side laser driver according to aspect 54, wherein the laser control signal is a differential signal, and the laser drive current generated by the laser driver is a single-ended signal that is proportional to the differential signal
56. The high-side laser driver according to aspect 55, wherein the laser driver further comprises a voltage-to-current converter configured to receive the laser control signal and convert the laser control signal to a differential current signal.
57. The high-side laser driver according to aspect 56, wherein the current mirror is configured to receive the differential current signal and generate the analog laser drive current based on the differential current signal.
58. The high-side laser driver according to aspect 57, wherein the laser driver is configured to add a constant current to one of the signals making up the analog laser control signal.
59. The high-side laser driver according to aspect 58, wherein the laser driver comprises a constant current source to generate the constant current.
60. The high-side laser driver according to aspect 58, wherein the laser driver is configured to generate the constant current based on a sum of the two signals making up the laser control signal.
61. The high-side laser driver according to any of aspects 54-60, wherein the laser control signal is a digital laser control signal, and the high-side laser driver further comprises:
   a digital-to-analog converter, DAC, configured to receive the digital laser control signal and generate an analog laser control signal using the digital laser control signal,
   wherein the high-side laser driver is configured to generate the laser drive current to have an amplitude that is proportional to the analog laser control signal.
62. The high-side laser driver according to any of aspects 59-61, wherein the DAC is configured to generate the analog laser control signal by converting the digital laser control signal.
63. The high-side laser driver according to aspect 61, wherein the DAC comprises:
   a memory configured to store a plurality of ordered multi-bit digital words,
   wherein the digital laser control signal comprises a clock signal, and
   wherein on each pulse of the clock signal, memory is configured to output a next multi-bit digital word of the plurality of ordered digital words, and
   wherein the DAC is configured to generate the analog laser control signal by converting the multi-bit digital word output by the memory.
64. The high-side laser driver according to aspect 62, wherein the laser control signal is an analog laser control signal, and
   wherein the high-side laser driver is configured to generate the laser drive current to have an amplitude that is proportional to the analog laser control signal.
65. The indirect time-of-flight, iToF system, according to aspect 1, wherein the laser driver comprises a mirror, the mirror configured to:
   receive a signal that is dependent on the analog laser control signal; and
   generate the analog laser drive current by mirroring the received signal.
66. The indirect time-of-flight, iToF, system according to aspect 65, wherein the mirror comprises a plurality of mirroring stages.
67. A laser driver system, the laser driver system comprising:
   a substrate;
   a laser driver, a first side of the laser driver coupled to the substrate;
   a vertical capacitor, a first side of the vertical capacitor coupled to the substrate; and
   a light source, a first side of the light source coupled to the substrate,
   wherein the laser driver, vertical capacitor and light source are connected in series, such that the connections between the laser driver, vertical capacitor and light source are between second sides of the laser driver, vertical capacitor and light source.
68. The laser driver system according to aspect 67, wherein the substrate comprises a ground plane.
69. The laser driver system according to aspects 67 or 68, wherein the laser driver is configured to receive an analog laser control signal from an imager.

### Second set of aspects:

1. An indirect time-of-flight, iToF, system comprising:
   an imager, the imager comprising:
      a controller configured to generate an analog laser control signal and an image sensor control signal; and
      an image sensor for accumulating charge based on received incident light, wherein the image sensor is configured to receive the image sensor control signal for controlling a timing of charge accumulation of the image sensor; and
   a laser driver coupled to the imager, wherein the laser driver is configured to receive the analog laser control signal and generate an analog laser drive current using the analog laser control signal, wherein the laser driver is configured to generate the analog laser drive current such that a change in an amplitude of the analog laser control signal causes a change in an amplitude of the analog laser drive current.
2. The iToF system according to aspect 1, wherein the laser driver comprises a current mirror configured to:
   receive a current signal that is dependent on the analog laser control signal; and
   generate the analog laser drive current by mirroring the received current signal.
3. The iToF system according to aspect 2, wherein the current mirror is a multiplicative current mirror.
4. The iToF system according to any of aspects 2 or 3, wherein the current mirror is a push-pull current mirror.
5. The iToF system according to any preceding aspect, wherein the controller comprises:
   a digital-to-analog converter, DAC , configured to receive a first clock signal and generate the analog laser control signal based on the first clock signal.
6. The iToF system according to aspect 5, wherein the iToF system further comprises a clock generator, the clock generator configured to generate a first clock signal, and wherein the DAC is configured to receive a first clock signal from the clock generator for use in generating the analog laser control signal,
   wherein the clock generator is configured to generate a second clock signal, and wherein the second clock signal is the image sensor control signal,
   wherein the first clock signal has a higher frequency than the second clock signal.
7. The iToF system of aspect 6, wherein the clock generator is configured to generate the second clock signal by dividing down the first clock signal.
8. The iToF system according to any preceding aspect, wherein the laser driver system comprises an offset generation circuit, and wherein the laser driver is configured to apply an offset to the analog laser driver current.
9. The iToF system according to any preceding aspect, wherein the laser driver includes a gain stage configured to amplify the analog laser control signal.
10. The iToF system according to any preceding aspect, wherein the iToF system comprises:
   a second laser driver coupled to the imager, wherein the second laser driver is configured to receive the analog laser control signal and generate a second analog laser drive current using the analog laser control signal, wherein the second laser driver is configured to generate the second analog laser drive current such that a change in an amplitude of the analog laser control signal causes a change in an amplitude of the analog laser drive current.
11. The iToF system according to aspect 10, wherein the first analog laser driver current is supplied to a first laser and the second analog laser driver current is supplied to the first laser or a second laser.
12. The iToF system according to any preceding aspect, wherein the imager comprises a first output configured to provide the analog laser control signal and the laser driver comprises a first input configured to receive the analog laser control signal, and wherein a first termination impedance is coupled to the first output and a second termination impedance is coupled to the first input, wherein the second termination impedance is matched to the first termination impedance.
13. The iToF system according to aspect 11, when dependent on aspect 10 or aspect 11, wherein the second laser driver comprises a first input configured to receive the analog laser control signal, and wherein a third termination resistance is coupled to the first input, wherein the third termination impedance is matched to the first termination impedance.
14. The iToF system according to any preceding aspect, wherein the analog laser control signal is a differential signal, and wherein the laser driver is configured to generate the analog laser drive current such that it is a single-ended signal.
15. The iToF system according to any preceding aspect, wherein the iToF system further comprises a laser coupled to the laser driver, wherein the laser is configured to receive the analog laser drive current for driving the laser to emit light.
16. The iToF system according to any preceding aspect, wherein:
   the analog laser control signal is a differential signal, and
   the analog laser drive current is a differential analog laser drive current.
17. The iToF system according to aspect 16, wherein the iToF system comprises a first laser coupled to the laser driver and a second laser coupled to the laser driver, and wherein the laser driver is configured to supply a first signal of the differential analog laser driver current to the first laser and to supply a second signal of the differential analog laser driver current to the second laser.
18. A laser driver for use in a time-of-flight, ToF, system that comprises an imager and a laser, the laser driver being configured to:
   receive an analog laser control signal;
   generate an analog laser drive current having an amplitude that is dependent on an amplitude of the analog laser control signal; and
   output the analog laser drive current to a laser for driving the laser to emit light.
19. The laser driver according to aspect 18, wherein the laser driver comprises a current mirror configured to:
   receive a signal that is dependent on the analog laser control signal; and
   generate the analog laser drive current by mirroring the received current signal.
20. An imager for use in a time-of-flight, ToF, system, the imager comprising:
   a controller configured to generate an analog laser control signal and an image sensor control signal; and
   an image sensor for accumulating charge based on received incident light, wherein the image sensor is configured to receive the image sensor control signal for controlling a timing of charge accumulation of the image sensor;
   wherein the imager is for coupling to a laser driver, and wherein the imager is configured to output the analog laser control signal to the laser driver.
21. The imager according to aspect 20, wherein the imager further comprises:
   a digital-to-analog converter, DAC, configured to receive a first clock signal and generate the analog laser control signal based on the first clock signal.

### Third set of aspects:

1. A time-of-flight, ToF, system comprising:
   an imager, the imager comprising:
      a controller configured to output a laser control signal and an image sensor control signal; and
      an image sensor for accumulating charge based on received incident light, wherein the image sensor is configured to receive the image sensor control signal for controlling a timing of charge accumulation of the image sensor;
   a laser driver system configured to receive the laser control signal, the laser driver comprising:
      a high-side laser driver, the high-side laser driver configured to generate a laser drive current dependent on the laser control signal.
2. The ToF system according to aspect 1, wherein the ToF system is an indirect time-of-flight, iToF, system.
3. The ToF system according to any preceding aspect, wherein the laser control signal is a digital laser control signal, and the laser driver system further comprises:
   a digital-to-analogconverter, DAC, configured to receive the digital laser control signal and generate an analog laser control signal using the digital laser control signal,
   wherein the high-side laser driver is configured to generate the laser drive current to have an amplitude that is dependent on the amplitude of analog laser control signal.
4. The ToF system according to aspect 3, wherein the DAC comprises:
   a memory configured to store a plurality of ordered multi-bit digital words,
   wherein the digital laser control signal comprises a clock signal, and
   wherein on each pulse of the clock signal, memory is configured to output a next multi-bit digital word of the plurality of ordered digital words, and
   wherein the DAC is configured to generate the analog laser control signal by converting the multi-bit digital word output by the memory.
5. The ToF system according to any preceding aspect, wherein the high-side laser driver is a high-side current mirror.
6. The ToF system according to any preceding aspect, wherein the high-side current mirror is a high-side multiplicative current mirror.
7. The ToF system according to aspect 5 or aspect 6, wherein the high-side current mirror is a high-side push-pull current mirror.
8. The ToF system according to any preceding aspect, wherein the laser driver system further comprises an output for outputting the laser drive current, and
   wherein the ToF system further comprises a laser comprising an anode that is coupled to the output of the laser driver system, wherein the laser is configured to receive the laser drive current for driving the laser to emit light.
9. The ToF system according to aspect 8, further comprising one or more additional high-side laser drivers coupled to the anode of the laser, wherein each of the additional laser drivers are configured to:
   receive the laser control signal or a respective additional laser control signal; and
   generate an additional laser drive current.
10. The ToF system according to aspect 9, wherein each of the additional laser drivers are configured to output the additional laser drive current to the anode of the laser.
11. The ToF system according to aspect 9, wherein each of the additional laser drivers are configured to output the additional laser driver current to an anode of one or more additional lasers.
12. The ToF system according to any of aspect 8 to 11, wherein the ToF system further comprises a vertical capacitor, wherein a first terminal of the vertical capacitor is coupled to a reference voltage and a second terminal of the vertical capacitor is coupled to a supply terminal of the high-side laser driver.
13. The ToF system according to aspect 12, wherein the ToF system further comprises a substrate, and wherein a first side of the laser driver system, a cathode on a first side of the laser and the first terminal on a first side of the vertical capacitor are coupled to a ground plane of the substrate.
14. The ToF system according to any of aspects 12 or 13, wherein:
   the output of the laser driver system is on a second side of the laser driver system, the second side being opposite to the first side of the laser driver;
   the anode of the laser is on a second side of the laser, the second side being opposite to the first side of the laser;
   the second terminal on a second side of the vertical capacitor; and
   the anode of the laser, the output of the laser driver system, and the second terminal of the vertical capacitor are coupled in series.
15. The ToF system according to aspect 14, wherein the second side of the laser driver system, the second side of the laser and the second side of the vertical capacitor are at the same height.
16. The ToF system according to any preceding aspect, wherein the laser control signal is a differential signal, and the laser drive current generated by the laser driver is a single-ended signal that is proportional to the differential signal.
17. The ToF system according to aspect 16, wherein the laser driver further comprises a voltage-to-current converter system configured to receive the laser control signal and convert the laser control signal to a differential current signal.
18. The ToF system according to any preceding aspect wherein the laser is a vertical cavity surface emitting lasers, VSCEL.
19. A laser driver system for use in a time-of-flight, ToF, system that comprises an imager and a laser, the laser driver system being configured to receive a laser control signal from the imager, wherein the laser driver system comprises:
   a high-side laser driver, the high-side laser driver configured to generate a laser drive current dependent on the laser control signal.
20. The laser driver system according to aspect 18, wherein the laser control signal is a digital laser control signal, and the laser driver system further comprises:
   a digital-to-analog, converter, DAC, configured to receive the digital laser control signal and generate an analog laser control signal using the digital laser control signal,
   wherein the high-side laser driver is configured to generate the laser drive current to have an amplitude that is proportional to the analog laser control signal.
21. A time-of-flight, ToF, system comprising:
   an imager, the imager comprising:
      a controller configured to output a laser control signal and an image sensor control signal;
   a laser driver system configured to receive the laser control signal, the laser driver comprising:
      a high-side multiplicative current mirror, the high-side multiplicative current mirror configured to generate a laser drive current dependent on the laser control signal.

## Claims

1. An indirect time-of-flight, iToF, system comprising:
an imager, the imager comprising:
a controller configured to generate an analog laser control signal and an image sensor control signal; and
an image sensor for accumulating charge based on received incident light, wherein the image sensor is configured to receive the image sensor control signal for controlling a timing of charge accumulation of the image sensor; and
a laser driver coupled to the imager, wherein the laser driver is configured to receive the analog laser control signal and generate an analog laser drive current using the analog laser control signal, wherein the laser driver is configured to generate the analog laser drive current such that a change in an amplitude of the analog laser control signal causes a change in an amplitude of the analog laser drive current.

2. The iToF system according to claim 1, wherein the laser driver comprises a current mirror configured to:
receive a current signal that is dependent on the analog laser control signal; and
generate the analog laser drive current by mirroring the received current signal.

3. The iToF system according to claim 2, wherein the current mirror is a multiplicative current mirror and optionally wherein the current mirror is a push-pull current mirror.

4. The iToF system according to any preceding claim, wherein the controller comprises:
a digital-to-analog converter, DAC, configured to receive a first clock signal and generate the analog laser control signal based on the first clock signal.

5. The iToF system according to claim 5, wherein the iToF system further comprises a clock generator, the clock generator configured to generate a first clock signal, and wherein the DAC is configured to receive a first clock signal from the clock generator for use in generating the analog laser control signal,
wherein the clock generator is configured to generate a second clock signal, and wherein the second clock signal is the image sensor control signal,
wherein the first clock signal has a higher frequency than the second clock signal, and optionally wherein the clock generator is configured to generate the second clock signal by dividing down the first clock signal.

6. The iToF system according to any preceding claim, wherein the laser driver system comprises an offset generation circuit, and wherein the laser driver is configured to apply an offset to the analog laser driver current.

7. The iToF system according to any preceding claim, wherein the laser driver includes a gain stage configured to amplify the analog laser control signal.

8. The iToF system according to any preceding claim, wherein the iToF system comprises:
a second laser driver coupled to the imager, wherein the second laser driver is configured to receive the analog laser control signal and generate a second analog laser drive current using the analog laser control signal, wherein the second laser driver is configured to generate the second analog laser drive current such that a change in an amplitude of the analog laser control signal causes a change in an amplitude of the analog laser drive current,
and optionally wherein the first analog laser driver current is supplied to a first laser and the second analog laser driver current is supplied to the first laser or a second laser.

9. The iToF system according to any preceding claim, wherein the imager comprises a first output configured to provide the analog laser control signal and the laser driver comprises a first input configured to receive the analog laser control signal, and wherein a first termination impedance is coupled to the first output and a second termination impedance is coupled to the first input, wherein the second termination impedance is matched to the first termination impedance.

10. The iToF system according to claim 9, when dependent on claim 7 or claim 8, wherein the second laser driver comprises a first input configured to receive the analog laser control signal, and wherein a third termination resistance is coupled to the first input, wherein the third termination impedance is matched to the first termination impedance.

11. The iToF system according to any preceding claim, wherein the analog laser control signal is a differential signal, and wherein the laser driver is configured to generate the analog laser drive current such that it is a single-ended signal.

12. The iToF system according to any preceding claim, wherein the iToF system further comprises a laser coupled to the laser driver, wherein the laser is configured to receive the analog laser drive current for driving the laser to emit light.

13. The iToF system according to any preceding claim, wherein:
the analog laser control signal is a differential signal, and
the analog laser drive current is a differential analog laser drive current, and optionally
wherein the iToF system comprises a first laser coupled to the laser driver and a second laser coupled to the laser driver, and wherein the laser driver is configured to supply a first signal of the differential analog laser driver current to the first laser and to supply a second signal of the differential analog laser driver current to the second laser.

14. A laser driver for use in a time-of-flight, ToF, system that comprises an imager and a laser, the laser driver being configured to:
receive an analog laser control signal;
generate an analog laser drive current having an amplitude that is dependent on an amplitude of the analog laser control signal; and
output the analog laser drive current to a laser for driving the laser to emit light.

15. An imager for use in a time-of-flight, ToF, system, the imager comprising:
a controller configured to generate an analog laser control signal and an image sensor control signal; and
an image sensor for accumulating charge based on received incident light, wherein the image sensor is configured to receive the image sensor control signal for controlling a timing of charge accumulation of the image sensor;
wherein the imager is for coupling to a laser driver, and wherein the imager is configured to output the analog laser control signal to the laser driver.
